(19) 

Europäisches
Patentamt
European
Patent Office
Office européen
des brevets

(11) **EP 4 336 786 A1**

(12) **EUROPEAN PATENT APPLICATION**
published in accordance with Art. 153(4) EPC

(43) Date of publication:
**13.03.2024 Bulletin 2024/11**

(21) Application number: **22831677.4**

(22) Date of filing: **13.06.2022**

(51) International Patent Classification (IPC):
**H04L 27/26** (2006.01)  **H04W 72/00** (2023.01)

(52) Cooperative Patent Classification (CPC):
**H04L 27/26; H04W 72/00**

(86) International application number:
**PCT/CN2022/098421**

(87) International publication number:
**WO 2023/273857 (05.01.2023 Gazette 2023/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.06.2021 CN 202110741712**

(71) Applicant: **Huawei Technologies Co., Ltd.
Longgang
Shenzhen, Guangdong 518129 (CN)**

(72) Inventors:
• **SHI, Meng
  Shenzhen, Guangdong 518129 (CN)**
• **XU, Minghui
  Shenzhen, Guangdong 518129 (CN)**
• **ZHANG, Jiayin
  Shenzhen, Guangdong 518129 (CN)**

(74) Representative: **Isarpatent
Patent- und Rechtsanwälte
Barth Hassa Peckmann & Partner mbB
Friedrichstraße 31
80801 München (DE)**

(54) **SIGNAL TRANSMISSION METHOD AND COMMUNICATION APPARATUS**

(57) This application provides a signal transmission method and a communication apparatus. The method may include: mapping a reference signal to a target location in a discrete Fourier transform-spread-orthogonal frequency division multiplexing DFT-s-OFDM symbol, where the target location is determined based on a pattern parameter of the reference signal and a location parameter of a data block, and the location parameter of the data block is used to determine a location of the data block in the DFT-s-OFDM symbol; and sending the DFT-s-OFDM symbol. According to this application, not only the pattern parameter of the reference signal is considered, but also the location parameter of the data block is considered, so that overall location distribution of the reference signal can be more proper, phase noise estimation performance and channel estimation performance are improved, and demodulation performance is improved.

600

Receive a reference signal based on a target location of the reference signal in a target symbol — 621

Determine the target location of the reference signal in the target symbol based on a pattern parameter of the reference signal and a location parameter of a data block — 610

Map the reference signal to the target location in the target symbol based on the target location of the reference signal in the target symbol — 622

Send the target symbol — 623

FIG. 6

EP 4 336 786 A1

## Description

This application claims priority to Chinese Patent Application No. 202110741712.9, filed with the China National Intellectual Property Administration on June 30, 2021 and entitled "SIGNAL TRANSMISSION METHOD AND COMMUNICATION APPARATUS", which is incorporated herein by reference in its entirety.

## TECHNICAL FIELD

This application relates to the communication field, and more specifically, to a signal transmission method and a communication apparatus.

## BACKGROUND

High-frequency communication, due to rich frequency band resources, becomes a hotspot of research and development in the industry to meet increasing communication requirements. However, severe intermediate radio frequency distortion problems, such as phase noise (phase noise, PHN) and center frequency offset (carrier frequency offset, CFO), may occur in high-frequency communication. In addition, a Doppler frequency shift of a high frequency is also greater. These problems all introduce a phase error, causing performance deterioration or even failure of a high-frequency communication system.

Currently, a phase tracking reference signal (phase tracking reference signal, PTRS) is mainly introduced for a conventional waveform, to compensate for impact of phase noise and improve demodulation performance in a phase noise condition.

One scheme for resisting high frequency phase noise is to use high subcarrier spacing (subcarrier spacing, SCS). However, a problem of insufficient cyclic prefixes (cyclic prefix, CP) exists in high SCS. In a case of large delay spread, the performance is improved by increasing a CP length of the conventional waveform, which leads to low efficiency of an entire network. A discrete Fourier transform-spread-orthogonal frequency division multiplexing (discrete Fourier transform-spread-orthogonal frequency division multiplexing, DFT-s-OFDM) waveform with flexible guard interval spread can improve the efficiency of the entire network while dealing with the large delay spread. Currently, there is no PTRS pattern design scheme for a DFT-s-OFDM waveform with flexible guard interval spread.

## SUMMARY

This application provides a signal transmission method and a communication apparatus, which may be applicable to a DFT-s-OFDM waveform with flexible guard interval spread, so that phase noise estimation performance of a PTRS is not affected by a conflict between a duplicate block and the PTRS, thereby improving demodulation performance.

According to a first aspect, a signal transmission method is provided. The method may be performed by a communication device (for example, a network device or a terminal device), or may be performed by a chip or a circuit used in a communication device, or may be implemented by a logical module or software that can implement all or some functions of a communication device. This is not limited in this application.

The method may include: mapping a reference signal to a target location in a discrete Fourier transform-spread-orthogonal frequency division multiplexing DFT-s-OFDM symbol, where the target location is determined based on a pattern parameter of the reference signal and a location parameter of a data block, and the location parameter of the data block is used to determine a location of the data block in the DFT-s-OFDM symbol; and sending the DFT-s-OFDM symbol.

According to a second aspect, a signal transmission method is provided. The method may be performed by a communication device (for example, a network device or a terminal device), or may be performed by a chip or a circuit used in a communication device, or may be implemented by a logical module or software that can implement all or some functions of a communication device. This is not limited in this application.

The method may include: determining a target location of a reference signal in a discrete Fourier transform-spread-orthogonal frequency division multiplexing (DFT-s-OFDM) symbol based on a pattern parameter of the reference signal and a location parameter of a data block, where the location parameter of the data block is used to determine a location of the data block in the DFT-s-OFDM symbol; and receiving the reference signal at the target location.

Based on the foregoing technical solution, for the target location of the reference signal in the DFT-s-OFDM symbol (for example, a DFT-s-OFDM symbol with flexible guard interval spread), not only the pattern parameter of the reference signal is considered, but also the location parameter of the data block is considered, so that overall location distribution of the reference signal can be more proper, and impact of poor performance caused by improper distribution of the reference signal, for example, a conflict between the reference signal and the data block (for example, the reference signal falls within a location range of the data block) is reduced. When phase noise estimation is performed based on the reference signal, phase noise estimation and compensation performance may be improved; when channel estimation is performed based on the reference signal, channel estimation performance may be improved; and the like. Therefore, according to this application, demodulation performance can be improved.

According to a third aspect, a signal transmission method is provided. The method may be performed by a communication device (for example, a network device or a terminal device), or may be performed by a chip or a circuit used in a communication device, or may be implemented by a logical module or software that can implement all or some functions of a communication device. This is not limited in this application.

The method may include: obtaining a pattern parameter of a reference signal and a location parameter of a data block in a discrete Fourier transform-spread-orthogonal frequency division multiplexing (DFT-s-OFDM) symbol, where the location parameter of the data block is used to determine a location of the data block in the DFT-s-OFDM symbol; and determining a target location of the reference signal in the DFT-s-OFDM symbol based on the pattern parameter of the reference signal and the location parameters of the data block.

With reference to the third aspect, in some implementations of the third aspect, the method further includes: receiving the reference signal based on the target location; or mapping the reference signal to the target location in the DFT-s-OFDM symbol.

With reference to the first aspect to the third aspect, in some implementations, the data block includes a data block replicated from a previous DFT-s-OFDM symbol adjacent to the DFT-s-OFDM symbol and a data block at an end location of the DFT-s-OFDM symbol.

With reference to the first aspect to the third aspect, in some implementations, when an initial location falls outside the location range of the data block, the target location is the initial location. When the initial location falls within the location range of the data block, the target location is different from the initial location. The initial location is a location that is of the reference signal in the DFT-s-OFDM symbol and that is determined based on the pattern parameter of the reference signal.

Based on the foregoing technical solution, the initial location of the reference signal may be first determined based on the pattern parameter of the reference signal, and the specific location of the data block in the DFT-s-OFDM symbol may be determined based on the location parameter of the data block. Whether the specific location of the data block in the DFT-s-OFDM symbol conflicts with an initial location of the reference signal is determined. If an initial location of the data block does not conflict with that of the reference signal, the reference signal is generated by using a current reference signal pattern (that is, the target location of the reference signal is the initial location of the reference signal). If the initial location of the data block conflicts with that of the reference signal, location distribution of the reference signal in the data block may be re-determined. In this way, the overall location distribution of the reference signal may be more proper, and interpolation distances may be more even.

With reference to the first aspect to the third aspect, in some implementations, when the initial location falls within the location range of the data block, a location of the reference signal within a first location range of the DFT-s-OFDM symbol is re-determined based on the initial location, and a location of the reference signal within a second location range of the DFT-s-OFDM symbol remains unchanged. The first location range represents the location range of the data block, and the second location range represents a location range other than the data block in the DFT-s-OFDM symbol. Alternatively, the first location range represents the location range other than the data block in the DFT-s-OFDM symbol, and the second location range represents the location range of the data block.

Based on the foregoing technical solution, if the initial location of the data block conflicts with that of the reference signal, the location distribution of the reference signal in the data block may be re-determined. For example, location distribution of the reference signal outside the data block remains unchanged, and the location distribution of the reference signal in the data block is re-determined. Alternatively, the location distribution of the reference signal in the data block remains unchanged, and the location distribution of the reference signal outside the data block is re-determined. In this way, some locations of the reference signal in the DFT-s-OFDM symbol may be adjusted, so that the overall location distribution of the reference signal can be more proper, and implementation is simple and easy.

With reference to the first aspect to the third aspect, in some implementations, the location of the reference signal within the first location range is re-determined based on a quantity of reference signals within the first location range, and/or the location of the reference signal within the second location range.

With reference to the first aspect to the third aspect, in some implementations, the data block includes a first data block and a second data block. The first location range represents the location range of the data block, the second location range represents the location range other than the data block in the DFT-s-OFDM symbol, and the location of the reference signal within the first location range meets the following formula:

$$X_{R1} = \lfloor M - K - X_{mean} \rfloor, \text{ and } X_{R2} = \lfloor M - X_{mean} \rfloor.$$

Alternatively, the first location range represents the location range other than the data block in the DFT-s-OFDM symbol, the second location range represents the location range of the data block, and the quantity of reference signals within the first location range meets the following formula:

$$N_1 = \left\lfloor \frac{M - K}{(M - 2R)/(CN - 2 * N_{conflict})} \right\rfloor, \text{ and } \quad N_2 = CN - 2 * N_{conflict} - N_1.$$

Herein, $X_{R1}$ represents a location of the reference signal within the location range of the first data block, $X_{R2}$ represents a location of the reference signal within the location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers included in the DFT-s-OFDM symbol, CN represents a quantity of reference signals, $N_{conflict}$ represents a quantity of reference signals within the location ranges of the first data block and the second data block, and ⌊ ⌋ represents rounding down.

With reference to the first aspect to the third aspect, in some implementations, the target location includes: a location of the reference signal within the location range of the data block, and a location of the reference signal within the location range other than the data block in the DFT-s-OFDM symbol. The location of the reference signal within the location range of the data block and the location of the reference signal within the location range other than the data block in the DFT-s-OFDM symbol are separately determined based on the pattern parameter of the reference signal.

Based on the foregoing technical solution, the location distribution of the reference signal in the data block and the location distribution of the reference signal outside the data block are separately determined. In this way, evenness of reference signal spacing can also be optimized, and data demodulation performance can be improved.

With reference to the first aspect to the third aspect, in some implementations, the DFT-s-OFDM symbol includes a plurality of data blocks, and locations of the reference signal within location ranges of all the data blocks are consistent; and/or, spacing between locations of the reference signal within the location range other than the data block in the DFT-s-OFDM symbol is the same.

Based on the foregoing technical solution, the locations of the reference signal within the location ranges of all the data blocks are consistent, and/or the pacing between the locations of the reference signal within the location range other than the data block in the DFT-s-OFDM symbol is the same, so that evenness of reference signal spacing can be optimized, and data demodulation performance can be provided.

With reference to the first aspect to the third aspect, in some implementations, the target location is located within the location range other than the data block in the DFT-s-OFDM symbol.

Based on the foregoing technical solution, even if the reference signal is designed to not fall in the data block, that is, the reference signal is not placed in the data block, so that a location conflict between the data block and the reference signal can be avoided.

With reference to the first aspect to the third aspect, in some implementations, a target quantity of reference signals within the location range of the data block is determined based on an initial quantity and a preset value, the initial quantity is determined based on the pattern parameter of the reference signal, and the preset value is an integer greater than 1 or equal to 1.

Based on the foregoing technical solution, by way of adding a reference signal in the data block, utilization of the data block is improved, and a capability of phase noise tracking is improved. Considering that the reference signal in the data block is increased, symbols used to transmit the data block may be reduced. Therefore, performance and resource consumption may be balanced based on an actual communication status.

With reference to the first aspect to the third aspect, in some implementations, the method further includes: performing a cyclic shift and/or frequency domain weighting processing on the DFT-s-OFDM symbol. Relative locations of the reference signal and the data block in the DFT-s-OFDM symbol remain unchanged.

Based on the foregoing technical solution, the cyclic shift or frequency domain weighting is performed on the DFT-s-OFDM symbol, to reduce filter smearing effect, improve signal adjacent channel leakage power ratio (adjacent channel leakage power ratio, ACLR) performance, and further improve system performance.

With reference to the first aspect to the third aspect, in some implementations, the reference signal is a phase tracking reference signal PTRS.

With reference to the first aspect to the third aspect, in some implementations, a pattern parameter of the PTRS includes a quantity of PTRS groups and a quantity of PTRS sampling points per PTRS group.

With reference to the first aspect to the third aspect, in some implementations, the location parameter of the data block includes the location of the data block in the DFT-s-OFDM symbol and a length of the data block in the DFT-s-OFDM symbol.

According to a fourth aspect, a communication apparatus is provided. The apparatus is configured to perform the method provided in any one of the first aspect to the third aspect. Specifically, the apparatus may include units and/or modules configured to perform the method provided in any one of the first aspect to the third aspect, for example, a processing unit and/or a communication unit.

In an implementation, the apparatus is a communication device (for example, a network device or a terminal device). When the apparatus is a communication device, the communication unit may be a transceiver or an input/output interface, and the processing unit may be a processor. Optionally, the transceiver may be a transceiver circuit. Optionally, the input/output interface may be an input/output circuit.

In another implementation, the apparatus is a chip, a chip system, or a circuit in a communication device (for example, a network device or a terminal device). When the apparatus is the chip, the chip system, or the circuit in the communication device, the communication unit may be an input/output interface, an interface circuit, an output circuit, an input circuit, a pin, a related circuit, or the like on the chip, the chip system, or the circuit. The processing unit may be a processor, a processing circuit, a logic circuit, or the like.

According to a fifth aspect, a communication apparatus is provided. The apparatus includes: a memory, configured to store a program; and a processor, configured to execute a computer program or instructions stored in the memory. When the computer program or the instructions stored in the memory are executed, the processor is configured to perform the method provided in any one of the first aspect to the third aspect.

In an implementation, the apparatus is a communication device (for example, a network device or a terminal device).

In another implementation, the apparatus is a chip, a chip system, or a circuit in a communication device.

According to a sixth aspect, this application provides a processor, configured to perform the method provided in any one of the first aspect to the third aspect. In a process of performing these methods, a process of sending the foregoing information and a process of receiving the foregoing information in the foregoing methods may be understood as a process of outputting the foregoing information by the processor and a process of receiving the foregoing input information by the processor. When outputting the foregoing information, the processor outputs the foregoing information to an interface, and transmits the information through the interface. After the information is output by the processor, other processing may further need to be performed on the information before the information arrives at the interface. Similarly, when the processor receives the foregoing input information, the interface receives the foregoing information, and inputs the foregoing information into the processor. Further, after the interface receives the foregoing information, other processing may need to be performed on the foregoing information before the information is input into the processor.

Unless otherwise specified, or if the operations such as transmission, sending, and obtaining/receiving do not conflict with actual functions or internal logic of the operations in related descriptions, the operations may be understood as operations such as output, receiving, and input, or may be understood as transmission, sending, and receiving operations performed by a radio frequency circuit and an antenna. This is not limited in this application.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, a computer-readable storage medium is provided. The computer-readable storage medium stores program code to be executed by a device, and the program code includes the method provided in any one of the first aspect to the third aspect.

According to an eighth aspect, a computer program product including instructions is provided. When the computer program product runs on a computer, the computer is enabled to perform the method provided in any one of the first aspect to the third aspect.

According to a ninth aspect, a chip is provided. The chip includes a processor and a communication interface. The processor reads, through the communication interface, instructions stored in a memory, to perform the method provided in any one of the first aspect to the third aspect.

Optionally, in an implementation, the chip may further include a memory. The memory stores a computer program or instructions. The processor is configured to execute the computer program or the instructions stored in the memory; and when the computer program or the instructions are executed, the processor is configured to perform the method provided in any one of the first aspect to the third aspect.

**BRIEF DESCRIPTION OF DRAWINGS**

FIG. 1 is a schematic diagram of a wireless communication system 100 applicable to an embodiment of this application;

FIG. 2 is a block diagram of a principle of SCP-DFT-s-OFDM;

FIG. 3 is a schematic diagram of description of duplicate block replication in SCP-DFT-s-OFDM;

FIG. 4 is a schematic diagram of location mapping corresponding to different PTRS pattern parameters in a DFT-s-OFDM symbol;

FIG. 5 is a schematic diagram of a conflict between a PTRS and a duplicate block in SCP-DFT-s-OFDM;

FIG. 6 is a schematic diagram of a signal transmission method 600 according to an embodiment of this application;

FIG. 7 is a schematic diagram in which there is no conflict between a location of a duplicate block and an initial location of a PTRS;

FIG. 8 is a schematic diagram of determining a target location of a PTRS based on a solution 1-1;

FIG. 9 is a schematic diagram of determining a target location of a PTRS based on a solution 1-2;

FIG. 10 is a schematic diagram of determining a target location of a PTRS based on a solution 2-1;

FIG. 11 is a schematic diagram of determining a target location of a PTRS based on a solution 2-2;

FIG. 12 shows a possible signal processing process applicable to an embodiment of this application;

FIG. 13 is a schematic diagram of determining a target location of a PTRS based on an implementation 3;

FIG. 14 is a schematic diagram of determining a target location of a PTRS based on an implementation 4;

FIG. 15 shows a flowchart of signal processing applicable to an implementation 4;

FIG. 16 is a schematic flowchart of a signal transmission method 1600 applicable to an embodiment of this application;

FIG. 17 is a schematic block diagram of a communication apparatus according to an embodiment of this application;

FIG. 18 is a schematic diagram of a structure of a communication apparatus according to an embodiment of this application; and

FIG. 19 is a schematic diagram of a chip system according to an embodiment of this application.

## DESCRIPTION OF EMBODIMENTS

The following describes technical solutions of this application with reference to accompanying drawings.

The technical solutions in embodiments of this application may be applied to various communication systems, for example, a fifth generation (5th generation, 5G) system or new radio (new radio, NR), a satellite communication system, a long term evolution (long term evolution, LTE) system, an LTE frequency division duplex (frequency division duplex, FDD) system, and an LTE time division duplex (time division duplex, TDD) system. The technical solutions in embodiments of this application may be further applied to a future communication system, for example, a sixth generation mobile communication system. The technical solutions in embodiments of this application may be further applied to device-to-device (device to device, D2D) communication, vehicle-to-everything (vehicle-to-everything, V2X) communication, machine-to-machine (machine to machine, M2M) communication, machine type communication (machine type communication, MTC), an internet of things (internet of things, IoT) communication system, or another communication system.

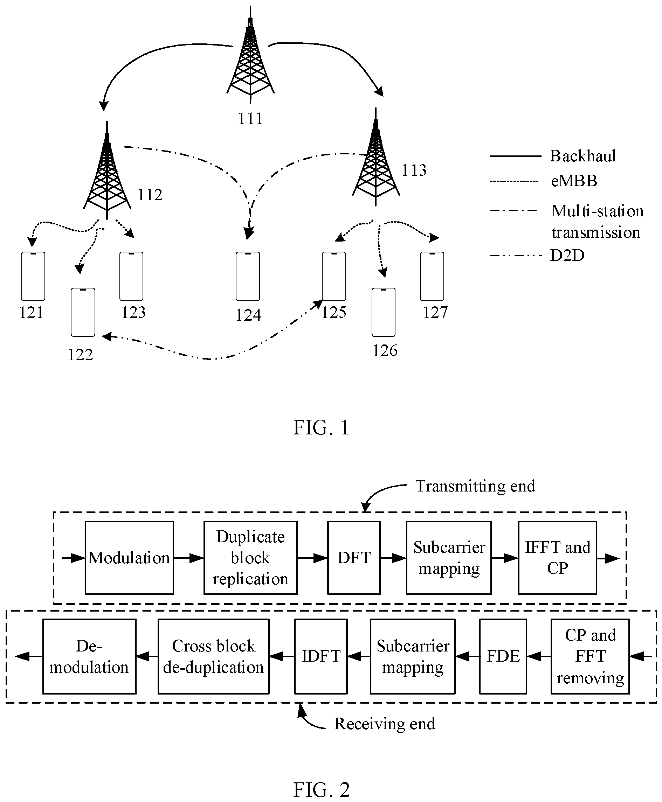

For ease of understanding of embodiments of this application, a communication system applicable to embodiments of this application is described with reference to FIG. 1.

FIG. 1 is a schematic diagram of a wireless communication system 100 applicable to embodiments of this application. As shown in FIG. 1, the wireless communication system 100 may include at least one network device, for example, a network device 111, a network device 112, and a network device 113 shown in FIG. 1. The wireless communication system 100 may further include at least one terminal device, for example, a terminal device 121, a terminal device 122, a terminal device 123, a terminal device 124, a terminal device 125, a terminal device 126, and a terminal device 127 shown in FIG. 1.

The network device may communicate with the terminal device. For example, in multi-station transmission shown in FIG. 1, the network device 112 may communicate with the terminal device 121, the terminal device 122, and the terminal device 123. For another example, in enhanced mobile broadband (enhanced mobile broadband, eMBB) transmission shown in FIG. 1, the network device 112 and the network device 113 may communicate with the terminal device 124. Communication may also be performed between network devices. For example, in backhaul shown in FIG. 1, the network device 111 may communicate with the network device 112 and the network device 113. Communication may also be performed between terminal devices, for example, D2D transmission shown in FIG. 1. For example, the terminal device 122 may communicate with the terminal device 125.

It should be further understood that the terminal device in the communication system may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal device may be a device that provides voice/data connectivity for a user, for example, a handheld device or vehicle-mounted device that has a wireless connectivity function. Currently, some terminals are, for example, a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device or a computing device that has a wireless communication function or another processing device connected to a wireless modem, a wearable device, a terminal device in a 5G network, and a terminal device in a future evolved public land mobile network (public land mobile network, PLMN). This is not limited in embodiments of this application. In vehicle-to-everything communication, a communication terminal carried on a vehicle is a terminal device, and a road side unit (road side unit, RSU) may also be used as a terminal device. A communication terminal is carried on an unmanned aerial vehicle, and may also be considered as a terminal device.

In embodiments of this application, the terminal device may be alternatively a wearable device. The wearable device may also be referred to as a wearable smart device, which is a generic term for wearable devices that are developed through intelligent design on daily wearables by using wearable technologies, such as glasses, gloves, watches, clothing, and shoes. The wearable device is a portable device that is worn directly on a body or integrated into a user's clothing or accessories. The wearable device is not only a hardware device, but also implements a powerful function through software support, data exchange, and cloud interaction. Generalized wearable intelligent devices include full-function and large-size devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may be alternatively a terminal device in an internet of things (internet of things, IoT) system. IoT is an important part of future development of information technologies. A main technical feature of the IoT is connecting things to a network by using a communication technology, to implement an intelligent network for human-machine interconnection and thing-thing interconnection.

It should be understood that the network device in the wireless communication system may be a device that can communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may cover various names in a broad sense, or may be replaced with the following names, for example, a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNodeB (master eNodeB, MeNB), a secondary eNodeB (secondary eNodeB, SeNB), a multi-standard radio (multi-standard radio, MSR) node, a home base station, a network controller, an access node, a wireless node, an access point (access point, AP), a transmitting node, and a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a positioning node, and the like. The base station may be a macro base station, a micro base station, a relay node, a donor node, or the like, or a combination thereof. The base station may be a communication module, a modem, or a chip that is disposed in the foregoing device or apparatus. The base station may be alternatively a mobile switching center, a device that bears a base station function in D2D, V2X, and M2M communication, a network side device in a 6G network, a device that bears a base station function in a future communication system, or the like. The base station may support networks of a same access technology or different access technologies. A specific technology and a specific device form that are used by the network device are not limited in embodiments of this application.

The base station may be stationary or mobile. For example, a helicopter or an unmanned aerial vehicle may be configured as a mobile base station, and one or more cells may move based on a location of the mobile base station. In other examples, a helicopter or an unmanned aerial vehicle may be configured as a device for communicating with another base station.

In some deployments, the network device in embodiments of this application may be a CU or a DU, or the network device includes a CU and a DU. The gNB may further include an active antenna unit (AAU).

The network device and the terminal device may be deployed on land, including an indoor or outdoor scenario and a handheld or vehicle-mounted scenario, or may be deployed on water, or may be deployed on an airplane, a balloon, and a satellite in the air. Scenarios in which the network device and the terminal device are located are not limited in embodiments of this application.

It should be understood that FIG. 1 is merely an example for description, and this application is not limited thereto. Embodiments of this application are applicable to any communication scenario in which a transmitting end device communicates with a receiving end device.

It should be further understood that a communication device (for example, a transmitting end device and a receiving end device) in this application may be a network device, or may be a terminal device. For example, the transmitting end device mentioned in embodiments of this application may be a terminal device, and the receiving end device may be a network device. For another example, the transmitting end device mentioned in embodiments of this application may be a network device, and the receiving end device may be a terminal device. For another example, both the transmitting end device and the receiving end device mentioned in embodiments of this application may be terminal devices. For another example, both the transmitting end device and the receiving end device mentioned in embodiments of this application may be network devices.

For ease of understanding embodiments of this application, the following first briefly describes several terms in this application.

1. Discrete Fourier transform-spread-orthogonal frequency division multiplexing (discrete Fourier transform-spread-orthogonal frequency division multiplexing, DFT-s-OFDM)

A DFT-s-OFDM waveform is widely used in various communication systems, for example, an LTE system, a 5G system, or an NR system. Compared with cyclic prefix orthogonal frequency division multiplexing (cyclic prefix orthogonal frequency division multiplexing, CP-OFDM), the DFT-s-OFDM waveform has a lower peak-to-average power ratio (peak-to-average power ratio, PAPR). After modulated data is arranged, the DFT-s-OFDM waveform performs discrete Fourier transform (discrete Fourier transform, DFT) before being mapped to a resource unit. A signal to be mapped to a subcarrier may meet, for example, Formula 1.

$$ y\left(k\right) = \frac{1}{\sqrt{N}} \sum_{i=0}^{N-1} x\left(i\right) e^{-\frac{j2\pi ik}{N}} $$

Formula 1

Herein, N is a quantity of subcarriers in a scheduled bandwidth, $x(i)$ is a modulation symbol, and $y(k)$ is a signal to be mapped on a subcarrier. A modulation method may include, for example, quadrature amplitude modulation (quadrature amplitude modulation, QAM), quadrature phase shift keying (quadrature phase shift keying, QPSK) modulation, $\pi/2$ binary phase shift keying ($\pi/2$ binary phase shift keying, $\pi/2$-BPSK) modulation, amplitude phase shift keying (amplitude phase shift keying, APSK) modulation, and non-uniform QAM modulation.

At the receiving end, after signal equalization is completed in frequency domain, an inverse discrete Fourier transform (inverse discrete Fourier transform, IDFT) operation is performed on a signal on a subcarrier in the scheduled bandwidth on a same OFDM symbol, to restore a transmitting signal.

2. Supplement cyclic prefix-discrete Fourier transform-spread-OFDM (supplement cyclic prefix-discrete Fourier transform-spread-OFDM, SCP-DFT-s-OFDM)

As an example, FIG. 2 is a block diagram of a principle of the SCP-DFT-s-OFDM.

As shown in FIG. 2, operations at the transmitting end may include at least: performing modulation (modulation) on an original bit, performing cross block repetition (cross block repetition) (or duplicate block replication), performing DFT, performing subcarrier mapping (subcarrier mapping), performing inverse fast Fourier transform (inverse fast Fourier transform, IFFT), and adding a cyclic prefix (cyclic prefix, CP). Operations at the receiving end may include at least: removing a CP and FFT, then performing channel estimation, frequency domain equalization (frequency domain equalization, FDE) processing, subcarrier de-mapping (subcarrier de-mapping), and IDFT, and then performing cross block de-repetition (cross block de-repetition) corresponding to the transmitting end. Further, demodulation is performed to obtain an original bit, and a symbol error rate is calculated to obtain system performance.

A main difference between the SCP-DFT-s-OFDM and the DFT-s-OFDM includes that cross block repetition is added to the transmitting end and cross block de-duplication is added to the receiving end. A cross block may also be referred to as a duplicate block, and a name of the cross block does not limit the protection scope of embodiments of this application. For uniformity, the following uses the "duplicate block" for description.

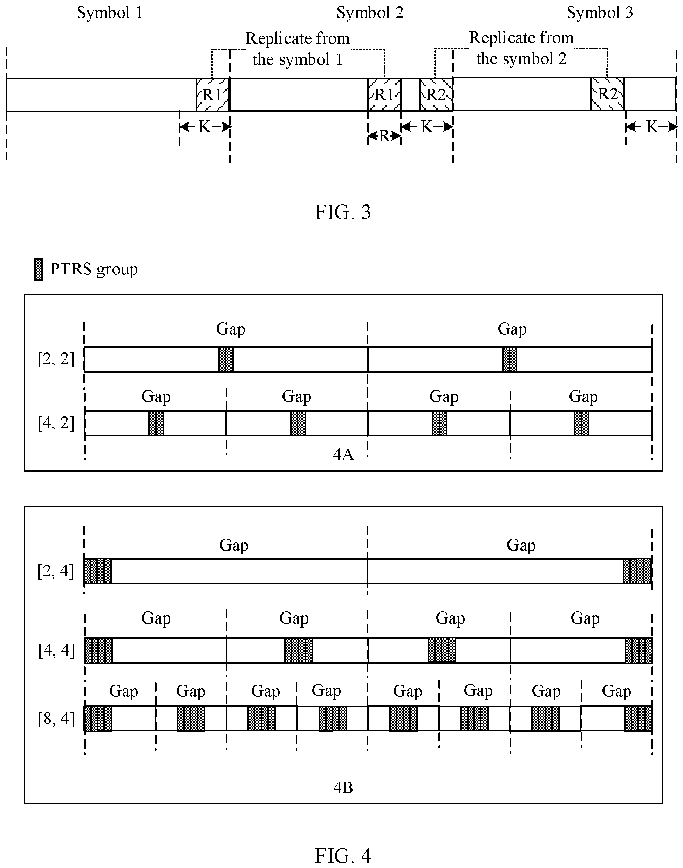

As an example, FIG. 3 is a schematic diagram of description of duplicate block replication in the SCP-DFT-s-OFDM.

A duplicate block represents a data block replicated from a previous symbol and a data block at the tail of a current symbol. As shown in FIG. 3, for a symbol 2, the duplicate block includes a data block R1 replicated from a symbol 1 and a data block R2 at the tail of the symbol 2. The data block indicates a complex symbol set or a plurality of complex symbols (complex-valued symbols). The "previous symbol" in "replicated from a previous symbol" refers to a transmitting symbol in time domain, that is, a previous transmitting symbol relative to the symbol 2. In other words, the symbol 1 and the symbol 2 represent transmitting symbols, the symbol 1 is adjacent to the symbol 2 in time domain, and the symbol 1 is located before the symbol 2 in time domain.

A location of the duplicate block in the symbol may be determined based on two location parameters, namely, a value of K and a value of R. The value of K may be used to determine the location of the duplicate block in the symbol, and the value of R may be used to determine coverage of the duplicate block. For example, the value of K may be determined based on a CP length. For example, the value of K is a quantity of equivalent points of a length occupied by the CP before DFT. For example, the value of R may be determined based on a channel. For example, when a channel delay is large, the value of R is large. In this way, a guard interval after the CP is supplemented may be larger, and system performance is improved.

Duplicate block replication indicates that a tail data block (for example, a data block R1) of the previous symbol (for example, the symbol 1) is replicated to a location K of a next symbol (for example, the symbol 2). In this way, after IFFT and CP addition, a longer supplementary CP can be formed (for example, for the symbol 2, before a DFT operation is performed, an equivalent length of the CP may be considered as (K+R)), thereby enhancing the equivalent length of the CP and improving system performance.

It should be understood that FIG. 2 and FIG. 3 are examples for description for ease of understanding. A specific symbol processing process and a specific operation of duplicate block replication are not limited in embodiments of this application.

It should be further understood that, in embodiments of this application, for differentiation, an SCP-DFT-s-OFDM symbol is used to represent a symbol to which a duplicate block replication operation is added. A specific name of the SCP-DFT-s-OFDM is not limited in embodiments of this application. For example, in a future protocol, another name of a symbol including a duplicate block replication operation is also applicable to embodiments of this application.

In high-frequency communication, for example, a millimeter wave (millimeter wave, mmW), for example, a frequency band over 6 gigahertz (GHz) (including 28 GHz, 60 GHz, 86 GHz, 95 GHz, and the like), abundant frequency band resources of the high-frequency communication become a hotspot of research and development in the industry to meet increasing communication requirements. High-frequency communication can achieve a high throughput due to features of a large bandwidth and a highly integrated antenna array. However, severe intermediate radio frequency distortion problems, such as phase noise (phase noise, PHN) and center frequency offset (carrier frequency offset, CFO), may further occur in high-frequency communication. In addition, a Doppler frequency shift of a high frequency is also greater. These problems all introduce a phase error, causing performance deterioration or even failure of a high-frequency communication system.

Take phase noise as an example. As a frequency band increases, a higher phase noise power spectral density indicates greater impact on a received signal. In some cases, a higher frequency band indicates more severe phase noise, and consequently indicates worse system performance.

According to the NR protocol, a phase tracking reference signal (phase tracking reference signal, PTRS) is introduced for both waveforms (CP-OFDM and DFT-s-OFDM), to compensate for impact of phase noise and improve demodulation performance in a phase noise condition.

A PTRS pattern design scheme of the DFT-s-OFDM waveform is briefly described by using the DFT-s-OFDM waveform as an example.

A PTRS pattern of DFT-s-OFDM is determined by a scheduled bandwidth, as shown in Table 1 below (for details, refer to the protocol TS38.214). Herein, $N_{RBi}$ (i=0, 1, 2, 3, 4) is a threshold (for example, may be referred to as a bandwidth threshold) configured by a base station for the terminal device by using higher layer signaling. For example, a value range of the bandwidth threshold configured by the base station for the terminal device is 1 to 276.

In a transmission process, the base station configures a scheduled bandwidth (scheduled bandwidth) for the terminal device. Both the base station and the terminal device determine a specific PTRS pattern parameter in current data transmission based on the scheduled bandwidth currently scheduled by the base station to the terminal device and Table 1. For example, the PTRS pattern parameter includes a quantity of PTRS groups (quantity of PTRS groups) and a quantity of sampling points per PTRS group (quantity of sampling points per PTRS group).

For example, if the scheduled bandwidth $N_{RB}$ configured by the base station meets a condition $N_{RB2} < N_{RB} < N_{RB3}$, the base station and the terminal device determine, based on Table 1, that the quantity of PTRS groups in the PTRS pattern is 4, and the quantity of PTRS sampling points per PTRS group is 2.

After the PTRS pattern parameter (for example, the quantity of PTRS groups and the quantity of sampling points per PTRS group) is determined, the base station and the terminal device may determine a specific location of the PTRS in one DFT-s-OFDM symbol according to a rule predefined in a protocol (for example, referring to the protocol TS38.211), as shown in Table 2. In Table 2, $M_{SC}^{PUSCH}$ indicates a quantity of resource elements (resource elements, REs) or a quantity of subcarriers included in the scheduled bandwidth. Index m of PTRS samples in OFDM symbol l prior to transform precoding (an index m of a PTRS sampling point in an OFDM symbol l prior to transform precoding (prior to transform precoding)) is used to determine a specific location of the PTRS in one DFT-s-OFDM symbol. For example, corresponding m is determined based on (the quantity of PTRS groups and the quantity of sampling points per PTRS group), and a specific location of the PTRS in one DFT-s-OFDM symbol may be determined based on a formula corresponding to m.

Table 1

| Scheduled bandwidth | Quantity of PTRS groups | Quantity of sampling points per PTRS group |
|---|---|---|
| $N_{RB0} \leq N_{RB} \leq N_{RB1}$ | 2 | 2 |
| $N_{RB1} \leq N_{RB} < N_{RB2}$ | 2 | 4 |
| $N_{RB2} \leq N_{RB} < N_{RB3}$ | 4 | 2 |
| $N_{RB3} \leq N_{RB} < N_{RB4}$ | 4 | 4 |
| $N_{RB4} \leq N_{RB}$ | 8 | 4 |

After the PTRS pattern parameter (for example, the quantity of PTRS groups and the quantity of sampling points per PTRS group) is determined, the determining a specific location of the PTRS in a DFT-s-OFDM symbol may include the following two steps.

(1) A quantity of QAM symbols included in one DFT-s-OFDM symbol is equally divided into $N_{group}^{PT-RS}$ gaps.

Herein, $N_{group}^{PT-RS}$ indicates the quantity of PTRS groups. The quantity of QAM symbols included in the DFT-s-OFDM symbol (for example, $M_{SC}^{PUSCH}$ in Table 2), that is, the quantity of REs or the quantity of subcarriers included in the scheduled bandwidth. The gap may be one or more symbols. A quantity of symbols in one gap may be determined, for example, based on a quantity of QAM symbols included in one DFT-s-OFDM symbol. For example, if a quantity of QAM symbols included in one DFT-s-OFDM symbol is 10, the DFT-s-OFDM symbol may be equally divided into two gaps, and each gap includes five symbols.

(2) The specific location is then determined based on the quantity of sampling points per PTRS group. $N_{samp}^{group}$ indicates the quantity of sampling points per PTRS group.

In Scenario 1, if $N_{samp}^{group} = 2$, it indicates that there are two sampling points per PTRS group, and one PTRS group is mapped in the middle of each gap, as shown in 4A in FIG. 4.
For example, FIG. 4 is a schematic diagram of location mapping corresponding to different PTRS pattern parameters in the DFT-s-OFDM symbol. In [a, b] in FIG. 4, a represents the quantity of PTRS groups, and b represents the quantity of sampling points per PTRS group. For example, assuming that there are two PTRS groups and two sampling points per PTRS group, it may be determined, based on the second row in Table 2, that one PTRS group is mapped to the middle of each of the first gap and the second gap, as shown in a diagram corresponding to [2,2] in 4A in FIG. 4. For another example, assuming that the quantity of PTRS groups is 4, and the quantity of sampling points per PTRS group is 2, it may be determined, based on the fourth row in Table 2, that one PTRS group is mapped to the middle each of the first gap to the fourth gap, as shown in a diagram corresponding to [4,2] in 4Ain FIG. 4.

**Table 2**

| Quantity of PTRS groups | Quantity of sampling points per PTRS group | Index m of PTRS samples in OFDM symbol l prior to transform precoding |
|---|---|---|
| 2 | 2 | $s\left\lfloor M_{SC}^{PUSCH}/4 \right\rfloor + k - 1$  *where s = 1, 3 and k = 0,1* |
| 2 | 4 | $sM_{SC}^{PUSCH} + k$  *where*  $\begin{cases} s = 0 \ and \ k = 0,1,2,3 \\ s = 1 \ and \ k = -4,-3,-2,-1 \end{cases}$ |
| 4 | 2 | $s\left\lfloor M_{SC}^{PUSCH}/8 \right\rfloor + k - 1$  *where s = 1, 3, 5, 7 and k = 0,1* |
| 4 | 4 | $sM_{SC}^{PUSCH}/4 + n + k$  *where*  $\begin{cases} s = 0 \ and \ k = 0,1,2,3 & n = 0 \\ s = 1,2 \ and \ k = -2,-1,0,1 & n = \left\lfloor M_{SC}^{PUSCH}/8 \right\rfloor \\ s = 4 \ and \ k = -4,-3,-2,-1 & n = 0 \end{cases}$ |
| 8 | 4 | $\left\lfloor sM_{SC}^{PUSCH}/8 \right\rfloor + n + k$  *where*  $\begin{cases} s = 0 \ and \ k = 0,1,2,3 & n = 0 \\ s = 1,2,3,4,5,6 \ and \ k = -2,-1,0,1 & n = \left\lfloor M_{SC}^{PUSCH}/16 \right\rfloor \\ s = 8 \ and \ k = -4,-3,-2,-1 & n = 0 \end{cases}$ |

In Scenario 2, if $N_{samp}^{group} = 4$ , it indicates that there are four sampling points per PTRS group, the first PTRS group is mapped to the head of the first gap, the last PTRS group is mapped to the tail of the last gap, and another PTRS group is mapped to the middle of a gap, as shown in 4B in FIG. 4.

For example, assuming that there are two PTRS groups and four sampling points per PTRS group, it may be determined, based on the third row in Table 2, that the first PTRS group is mapped to the head of the first gap, and that the last PTRS group is mapped to the tail of the last gap, as shown in a diagram corresponding to [2,4] in 4B in FIG. 4. For another example, assuming that there are four PTRS groups and four sampling points per PTRS group, it may be determined, based on the fifth row in Table 2, that the first PTRS group is mapped to the head of the first gap, the last PTRS group is mapped to the tail of the last gap, and the other two PTRS groups are respectively mapped to the middle locations of the second gap and the third gap, as shown in a diagram corresponding to [4,4] in 4B in FIG. 4. For another example, assuming that there are eight PTRS groups and four sampling points per PTRS group, it may be determined, based on the last row in Table 2, that the first PTRS group is mapped to the head of the first gap, the last PTRS group is mapped to the tail of the last gap, and the other six PTRS groups are respectively mapped to the middle locations of the middle gaps, for example, a diagram corresponding to [8,4] in 4B in FIG. 4.

It should be understood that Table 2 and FIG. 4 show a specific location of a PTRS that is in one DFT-s-OFDM symbol and that is determined based on a related protocol. This is not limited in embodiments of this application. For example, in the future protocol, after a scheme of determining a specific location of a PTRS in one DFT-s-OFDM symbol based on a PTRS pattern parameter change, the changed scheme is also applicable to embodiments of this application.

One scheme for resisting high frequency phase noise is to use high subcarrier spacing (subcarrier spacing, SCS). However, high SCS may have a problem of insufficient CPs. In a case of large delay spread, a method of increasing a CP length for a conventional waveform (such as CP-OFDM and DFT-s-OFDM) to improve performance results in relatively low efficiency of an entire network. An SCP-DFT-s-OFDM waveform with flexible guard interval spread can improve the efficiency of the entire network while dealing with the large delay spread.

Currently, there is no PTRS pattern design for the SCP-DFT-s-OFDM waveform. If a PTRS pattern of DFT-s-OFDM is reused, a problem may exist. For example, a PTRS may conflict with a duplicate block. Consequently, a problem such as uneven PTRS interpolation distances or a lack of a PTRS in the duplicate block may occur, therefore affecting phase noise estimation performance.

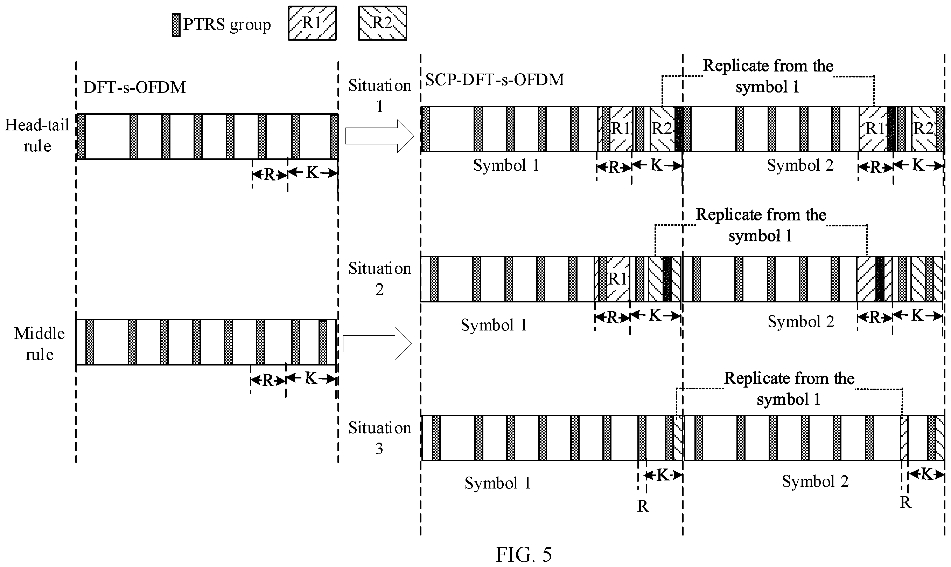

For example, FIG. 5 is a schematic diagram of a conflict between a PTRS and a duplicate block in SCP-DFT-s-OFDM. It should be understood that FIG. 5 is a simple example for description, and does not limit the protection scope of embodiments of this application.

As shown in a case 1 (case 1) in FIG. 5, locations of PTRSs in a symbol are distributed according to a head-tail (head_tail) rule. The head-tail rule is that the first PTRS group is mapped to the head of the first gap, the last PTRS group is mapped to the tail of the last gap, and other PTRS groups are mapped to the middle locations of middle gaps. For example, when the PTRS pattern parameter is configured as [8,4] (that is, the quantity of PTRS groups is 8, and the quantity of sampling points per PTRS group is 4), distribution may be performed according to the head-tail rule. In the case 1, a location of a duplicate block R1 conflicts with a location of the PTRS. After the symbol 2 is replicated by using a data block R2 at the tail of the symbol 1, a relative location of a PTRS in the generated duplicate block R1 (that is, the duplicate block R1 in the symbol 2) is consistent with that in R2 in the symbol 2, as shown by a black shadow block in the symbol 2. It may be found that, after replication, the location of the PTRS changes, distances between PTRSs represented by black shadow blocks and surrounding PTRSs are uneven, and interpolation distances are uneven. This may affect performance of PTRS phase noise estimation, consequently affecting system performance.

For example, in a case 2 and a case 3 in FIG. 5, locations of PTRSs in the symbol are distributed according to a middle (middle) rule. The middle rule means that each PTRS group is mapped to a middle location of a gap. According to the middle rule, after duplicate block replication, PTRS locations in newly generated symbols are also unevenly distributed. As shown in the case 2 in FIG. 5, PTRSs in the duplicate blocks R1 and R2 in the symbol 2 are unevenly distributed. Therefore, interpolation performance and phase noise estimation performance may be affected. As shown in the case 3 in FIG. 5, because a value of a location parameter R of a duplicate block is relatively small, a data block R2 at the tail of original data does not include a PTRS, and a data block R1 includes a PTRS. In this case, after duplicate block replication, the duplicate block R2 replicated in the symbol 2 does not include a PTRS, and therefore, the duplicate block R1 in the symbol 2 does not include a PTRS. Consequently, an entire symbol lacks a PTRS group, and performance of PTRS phase noise estimation is affected.

In view of this, embodiments of this application provide a solution that is applicable to a SCP-DFT-s-OFDM waveform, so that phase noise estimation performance of a PTRS is not affected by a conflict between a duplicate block and the PTRS, thereby improving demodulation performance.

In this application, an example in which a reference signal is a PTRS is used. For differentiation, an initial location of the PTRS is used to represent original location distribution of the PTRS, that is, when a location of a duplicate block is not considered, location distribution of the PTRS is determined based on a PTRS pattern parameter (for example, a quantity of PTRS groups and a quantity of sampling points per PTRS group) or a PTRS pattern is determined based on a PTRS pattern parameter. A target location of the PTRS is used to represent finally determined location distribution of the PTRS or a finally determined PTRS pattern, that is, the determined location distribution of the PTRS when the location of the duplicate block is considered.

The following describes in detail embodiments provided in this application with reference to the accompanying drawings.

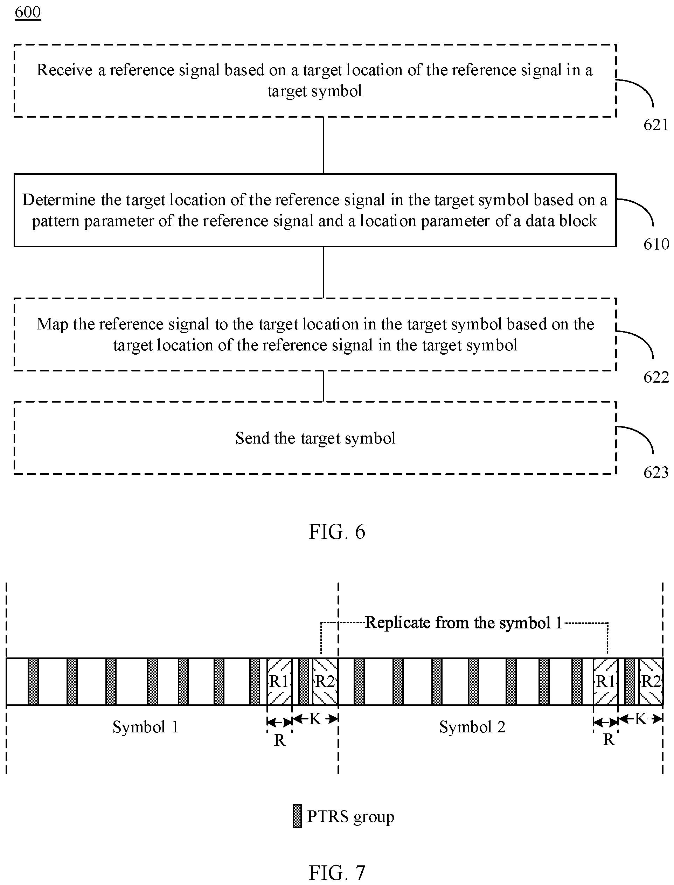

FIG. 6 is a schematic diagram of a signal transmission method 600 according to an embodiment of this application. An example in which a communication device (for example, a network device or a terminal device) performs the method 600 is used. The communication device may be, for example, a transmitting end device, or may be a receiving end device. The method 600 may include the following steps.

610: Determine a target location of a reference signal in a target symbol based on a pattern parameter of the reference signal and a location parameter of a data block.

The location parameter of the data block may be used to determine a location of the data block in the target symbol.

The reference signal may be, for example, a PTRS, or another reference signal. It can be understood that, in actual communication, the location of the reference signal in the target symbol may be determined based on an actual communication status and by using a manner of this embodiment of this application.

The pattern parameter of the reference signal indicates a parameter that can be used to determine location distribution of the reference signal in the target symbol (or a pattern (pattern) of the reference signal in the target symbol). For example, the reference signal is a PTRS. A PTRS pattern parameter may include, for example, but is not limited to, a quantity of PTRS groups and/or a quantity of sampling points per PTRS group.

The data block may represent a complex symbol set or a plurality of complex symbols. The plurality of complex symbols may include a reference signal sampling point, and the reference signal sampling point may include, for example, a PTRS sampling point. The plurality of complex symbols may further include a modulation symbol obtained by modulating an encoded bit stream.

In a possible case, the data block includes a data block replicated from a previous symbol adjacent to the target symbol and a data block at an end location of the target symbol. For differentiation, this type of data block is referred to as a duplicate block, for example, the duplicate block shown in FIG. 3. In this embodiment of this application, "the target symbol" and "the previous symbol adjacent to the target symbol" are mentioned for a plurality of times, and represent two transmitting symbols adjacent in time domain. That is, "the target symbol" represents a transmitting symbol after "the previous symbol adjacent to the target symbol" in time domain, and "the previous symbol adjacent to the target symbol" represents a transmitting symbol before "the target symbol" in time domain.

For example, there may be one or more data blocks. For another example, another type of data block, for example, a data block at the end location of the target symbol, a data block at a specific location of the target symbol, or a data block replicated from the another symbol in the target symbol, is also applicable to this embodiment of this application. It may be understood that the quantity of data blocks and a type of the data block may be other values. The following mainly uses a duplicate block as an example for description.

A location parameter of the duplicate block indicates that a parameter that can be used to determine a location of the duplicate block in the target symbol (or, a parameter that can be used to determine location distribution of the duplicate block in the target symbol). For example, the location parameter of the duplicate block may include: a value of K and/or a value of R. For the value of K and the value of R, refer to the foregoing descriptions. Details are not described herein again.

Related solutions of the pattern parameter of the reference signal and the location parameter of the duplicate block are described in detail below with reference to content in an aspect 2.

The target symbol may be, for example, a DFT-s-OFDM symbol (for example, the SCP-DFT-s-OFDM symbol described above). It should be understood that, for a specific name of the DFT-s-OFDM symbol including the duplicate block, the SCP-DFT-s-OFDM symbol is a possible naming manner. This is not limited in this embodiment of this application. For example, in a future protocol, another name of the DFT-s-OFDM symbol including the duplicate block is also applicable to this embodiment of this application. For ease of description, the following mainly uses an SCP-DFT-s-OFDM symbol as an example for description.

For a manner in which the target location of the reference signal in the target symbol is determined, the following describes in detail with reference to content of an aspect 1.

In a possible case, the method 600 may include step 621.

621: Receive the reference signal based on the target location of the reference signal in the target symbol.

If the communication device (or the apparatus) that performs the method 600 is the receiving end device, the receiving end device may receive the reference signal based on the target location of the reference signal in the target symbol, and may perform channel estimation based on the reference signal, or may perform phase noise estimation and compensation based on the reference signal. In actual communication, different operations may be performed based on a function of the reference signal. This is not limited herein.

For example, the reference signal is a PTRS, and the target symbol is an SCP-DFT-s-OFDM symbol. The receiving end device may receive the PTRS based on a determined target location of the PTRS in the SCP-DFT-s-OFDM symbol, and perform phase noise estimation and compensation, to complete data demodulation.

In another possible case, the method 600 may include steps 622 and 623.

622: Map the reference signal to the target location in the target symbol based on the target location of the reference signal in the target symbol.

623: Send the target symbol.

If the communication device (or the apparatus) that performs the method 600 is the transmitting end device, the transmitting end device may further map the reference signal to the target location in the target symbol based on the target location of the reference signal in the target symbol, and send the target symbol.

For example, the reference signal is a PTRS, and the target symbol is an SCP-DFT-s-OFDM symbol. The transmitting end device may determine a target location of the PTRS, generate the corresponding SCP-DFT-s-OFDM symbol, and then send data (that is, send the SCP-DFT-s-OFDM symbol).

In this embodiment of this application, for the target location of the reference signal in the SCP-DFT-s-OFDM symbol, not only the pattern parameter of the reference signal is considered, but also the location parameter of the duplicate block is considered, so that overall location distribution of the reference signal can be more appropriate, and impact of relatively poor performance caused by improper distribution of the reference signal, for example, a conflict between the reference signal and the duplicate block (for example, the reference signal falls within a location range of the duplicate block) is reduced. Therefore, when phase noise estimation is performed based on the reference signal, phase noise estimation and compensation performance may be improved; when channel estimation is performed based on the reference signal, channel estimation performance may be improved; and the like. Therefore, according to this embodiment of this application, demodulation performance can be improved.

The following mainly describes the solutions of embodiments of this application from two aspects. For ease of understanding, an example in which a reference signal is a PTRS and a target symbol is an SCP-DFT-s-OFDM symbol is mainly used for description.

According to the aspect 1, a manner of determining a target location of the PTRS is as follows.

Optionally, the target location of the PTRS may be determined in at least the following implementations.

In an implementation 1, an initial location of the PTRS is first determined based on a PTRS pattern parameter, and then the target location of the PTRS is determined based on a location parameter of a duplicate block.

Based on the implementation 1, phase noise estimation performance of the PTRS can be not affected by a conflict between the duplicate block and the PTRS, and a protocol is slightly modified and easy to implement.

In an implementation 2, the target location of the PTRS is directly determined based on the pattern parameter of the PTRS and the location parameter of the duplicate block.

Based on the implementation 2, phase noise estimation performance of the PTRS can be not affected by the conflict between the duplicate block and the PTRS, and can be applied to more communication scenarios. A PTRS pattern parameter and a location parameter of the duplicate block that are suitable for a communication scenario can be determined based on a specific situation of the communication scenario, and the target location of the PTRS can be directly determined based on the PTRS pattern parameter and the location parameter of the duplicate block.

It should be understood that the implementation 1 and the implementation 2 may be used independently or used in combination. For example, during combined use, whether the location of the PTRS needs to be re-determined (or location distribution of the PTRS is redefined) may be first determined based on the implementation 1. When the location of the PTRS is re-determined, the implementation 2 may be used. For another example, during independent use, the target location of the PTRS may be directly determined by using the implementation 2. In other words, the initial location of the PTRS does not need to be first determined based on the pattern parameter of the PTRS, and then whether the location of the PTRS needs to be re-determined is determined.

The following describes the foregoing two implementations in detail.

In the implementation 1, the initial location of the PTRS is first determined based on the pattern parameter of the PTRS, and then the target location of the PTRS is determined based on the location parameter of the duplicate block.

Based on the implementation 1, the initial location of the PTRS may be first determined based on the pattern parameter of the PTRS, and a specific location of the duplicate block in the SCP-DFT-s-OFDM symbol is determined based on the location parameter of the duplicate block. Whether the specific location of the duplicate block in the SCP-DFT-s-OFDM symbol conflicts with the initial location of the PTRS is determined.

If the specific location of the duplicate block in the SCP-DFT-s-OFDM symbol does not conflict with the initial location of the PTRS, the target location of the PTRS is the initial location of the PTRS, that is, a current PTRS pattern configuration is used. If the specific location of the duplicate block in the SCP-DFT-s-OFDM symbol conflicts with the initial location of the PTRS, the target location of the PTRS is different from the initial location of the PTRS, that is, the target location of the PTRS is re-determined.

The following describes steps applicable to the implementation 1.

(1) The initial location of the PTRS is determined based on the pattern parameter of the PTRS.

A manner of determining the initial location of the PTRS based on the pattern parameter of the PTRS may be, for example, determined with reference to a stipulation in a related communication protocol. For example, with reference to the foregoing PTRS pattern design scheme of the DFT-s-OFDM waveform, a quantity of PTRS groups and a quantity of sampling points per PTRS group are determined based on a scheduled bandwidth $N_{RB}$ configured by a network device, and then the initial location of the PTRS is determined based on the quantity of PTRS groups and the quantity of sampling points per PTRS group.

In the following, for brevity, CN is used to represent the quantity of PTRS groups, and CS is used to represent a quantity of sampling points per PTRS group (that is, a quantity of PTRS sampling points in each PTRS group). The initial location of the PTRS may be determined based on the CN and the CS.

(2) The specific location of the duplicate block in the SCP-DFT-s-OFDM symbol is determined based on the location parameter of the duplicate block.

A manner of determining the specific location of the duplicate block in the SCP-DFT-s-OFDM symbol based on the location parameter of the duplicate block may be, for example, determined with reference to a stipulation in a related communication protocol. For example, the location parameter of the duplicate block includes a value of K and a value of R, and the specific location of the duplicate block in the SCP-DFT-s-OFDM symbol may be determined based on the value of K and the value of R.

For brevity, the following uses a location of the duplicate block to indicate the specific location of the duplicate block in the SCP-DFT-s-OFDM symbol.

(3) Whether the location of the duplicate block conflicts with the initial location of the PTRS is determined.

That the location of the duplicate block conflicts with the initial location of the PTRS may also be described as that the initial location of the PTRS falls within a location range of the duplicate block. This means that some or all PTRSs fall within the location range of the duplicate block, or that the duplicate block falls within an initial location range of the PTRS. Alternatively, this may be understood that performing a duplicate block replication operation (or a duplicate block de-replication operation) affects the initial location of the PTRS, as shown in the three cases in FIG. 5. Correspondingly, that there is no conflict between the location of the duplicate block and the initial location of the PTRS may also be described as that the initial location of the PTRS falls outside the location range of the duplicate block (or the initial location of the PTRS does not fall within the location range of the duplicate block). This means that all PTRSs do not fall within the location range of the duplicate block, or the duplicate block falls outside the initial location range of the PTRS, or may be understood as that performing a duplicate block replication operation (or a duplicate block de-replication operation) does not affect the initial location of the PTRS.

It should be understood that "conflict with" may also be replaced with "coincide with", "cross over", "overlap with", or the like, and the following is described by using "conflict with".

In a possible case, there is no conflict between a location of the duplicate block and the initial location of the PTRS. In this case, the target location of the PTRS is the initial location of the PTRS. In other words, the initial location of the PTRS may be used to perform a subsequent operation, for example, step 621 or steps 622 and 623. The target location of the PTRS is the initial location of the PTRS, that is, it indicates that the location of the PTRS in the SCP-DFT-s-OFDM symbol is determined based on the pattern parameter of the PTRS.

For example, FIG. 7 is a schematic diagram in which there is no conflict between the location of the duplicate block and the initial location of the PTRS.

As shown in FIG. 7, a symbol 1 and a symbol 2 are used as an example for description. A duplicate block in the symbol 2 includes a data block R2 at the tail and a data block R1 replicated from a previous symbol (namely, the symbol 1). There is no conflict between the duplicate blocks R (for example, R1 and R2) and the initial location. In this case, after a duplicate block replication operation is performed, the initial location of the PTRS is not affected, and the location of the duplicate block does not affect corresponding phase noise estimation performance. Therefore, the initial location of the PTRS determined based on the pattern parameter of the PTRS may be used to perform a subsequent operation.

In still another possible case, the location of the duplicate block conflicts with the initial location of the PTRS.

In this case, in a possible design, a location of the PTRS within a first location range of the SCP-DFT-s-OFDM symbol is re-determined, and a location of the PTRS within a second location range of the SCP-DFT-s-OFDM symbol remains unchanged. The first location range indicates the location range of the duplicate block, and the second location range indicates a location range other than the duplicate block in the SCP-DFT-s-OFDM symbol. Alternatively, the first location range indicates a location range other than the duplicate block in the SCP-DFT-s-OFDM symbol, and the second location range indicates a location range of the duplicate block. The following describes two solutions in detail.

Solution 1-1: A PTRS location outside the duplicate block remains unchanged, and a PTRS location in the duplicate block is re-determined.

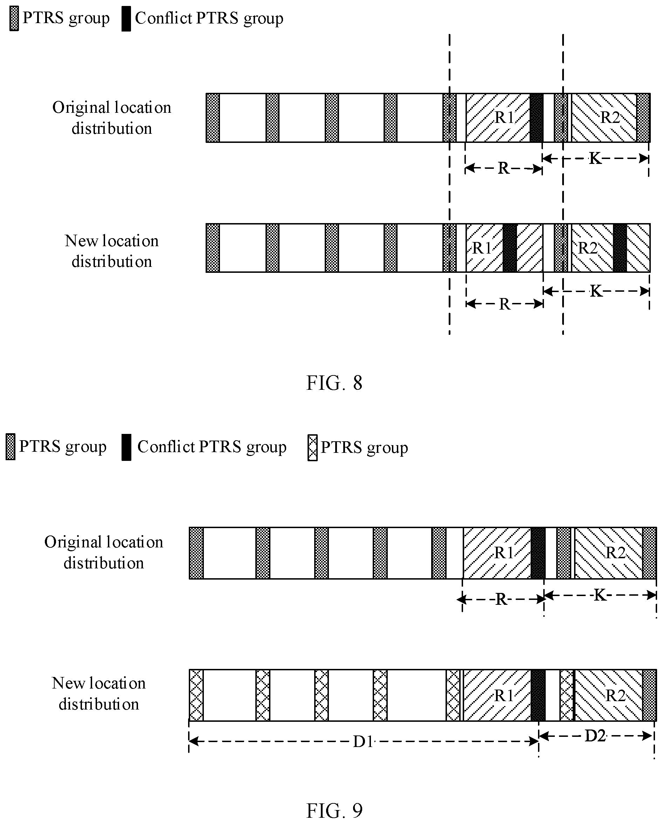

According to the solution 1-1, in a possible distribution manner, relative locations of PTRSs in duplicate blocks are consistent, that is, locations of PTRSs in the duplicate blocks are consistent relative to the duplicate block. In updated location distribution shown in FIG. 8, a location of the PTRS in R1 is consistent with a location of the PTRS in R2.

When the location of the duplicate block conflicts with the initial location of the PTRS, location distribution of the PTRS in the duplicate block may be redefined, and location distribution of the PTRS outside the duplicate block remains unchanged. In this way, overall PTRS location distribution is more appropriate, interpolation distances are more even, impact of poor performance caused by uneven interpolation distances in PTRS phase noise estimation is reduced, PTRS phase noise estimation and compensation performance are improved, demodulation performance is improved, and spectral efficiency is improved.

In a possible implementation, the pattern parameter of the PTRS in the duplicate block may be re-determined, and the location of the PTRS in the duplicate block is determined based on the pattern parameter of the PTRS in the duplicate block. The pattern parameter of the PTRS in the duplicate block indicates that the pattern parameter of the PTRS is used to determine the location of the PTRS in the duplicate block. For example, the pattern parameter of the PTRS in the duplicate block may be determined based on a quantity of conflicts between the location of the duplicate block and the initial location of the PTRS.

In the following, for brevity, the quantity of conflicts is used to represent a quantity of conflicts between the location of the duplicate block and the initial location of the PTRS.

The quantity of conflicts may include, for example, a quantity of conflict PTRS groups and/or a quantity of conflict PTRS sampling points. The quantity of conflicting PTRS groups is a quantity of PTRS groups in which the location of the duplicate block conflicts with the initial location of the PTRS. The quantity of conflicting PTRS sampling points is a quantity of PTRS sampling points in which the location of the duplicate block conflicts with the initial location of the PTRS. For understanding, the following mainly uses an example in which the quantity of conflict groups is the quantity of conflict PTRS groups for description.

It is assumed that $N_{group}^{conflict}$ is used to represent the quantity of conflicts (that is, the quantity of conflict PTRS groups). For example, $N_{group}^{conflict}$ may meet Formula 2. $N_{group}^{conflict} = \max$ (a quantity of conflict PTRS groups in R1, a quantity of conflict PTRS groups in R2)

Formula 2

In other words, a maximum value of a quantity of conflict PTRS groups in R1 and R2 is used as the quantity of conflict PTRS groups (that is, $N_{group}^{conflict}$). For example, if the quantity of conflict PTRS groups in R1 is 0, and the quantity of conflict PTRS groups in R2 is 1, a maximum value 1 is used as a quantity of conflict PTRS groups of the location of the duplicate block and the initial location of the PTRS, that is, $N_{group}^{conflict} = 1$. $N_{group}^{conflict}$ is used as a quantity of PTRS groups that need to be configured in the duplicate block, and the location of the PTRS in the duplicate block is re-determined based on the quantity of PTRS groups that need to be configured in the duplicate block. For example, the location of the PTRS in the duplicate block may be determined based on the quantity of PTRS groups that need to be configured in the duplicate block and a distance between locations of PTRSs that are adjacent to the duplicate block and that are located outside the duplicate block. The following is described with reference to FIG. 8.

For example, FIG. 8 is a schematic diagram of determining the target location of the PTRS based on the solution 1-1.

As shown in FIG. 8, the initial location of the PTRS is determined based on the pattern parameter of the PTRS. After a duplicate block replication operation is performed, the initial location of the PTRS becomes original location distribution (or may be referred to as an old pattern (old pattern)) shown in FIG. 8. A location of the PTRS in R1 is shown by a black block (that is, the black block represents a conflict PTRS group). Interpolation distances of this pattern are not even. Consequently, PTRS phase noise estimation and compensation performance deteriorate, system performance is affected, and spectral efficiency is reduced. Therefore, the location of the PTRS in the duplicate block may be re-determined by using the solution 1-1. Re-determining the location of the PTRS in the duplicate block may include the following steps.

(1) Determine of PTRS locations that are outer adjacent to R1 and R2.
The PTRS locations that are outer adjacent to R1 and R2 are two shadow blocks marked by dashed lines shown in FIG. 8. The two shadow blocks respectively represent the PTRS location adjacent to R1 and the PTRS location

EP 4 336 786 A1

adjacent to R2. For differentiation, $Y_{ptrs1}$ is used to represent the PTRS location that is outer adjacent to R1, and $Y_{ptrs2}$ is used to represent the PTRS location that is outer adjacent to R2.

(2) PTRS locations in R1 and R2 are calculated based on the PTRS locations that are outer adjacent to R1 and R2 and a quantity of PTRS groups that need to be configured in R1 and R2.

In a possible manner, the PTRS location $X_{ptrs\_R1}$ in R1 and the PTRS location $X_{ptrs\_R2}$ in R2 are calculated based on an equal spacing principle. As shown in FIG. 8, $N_{group}^{conflict} = 1$. $X_{ptrs\_R1}$ and $X_{ptrs\_R2}$ can meet Formula 3.

$$X_{ptrs\_R1} = \frac{Y_{ptrs1} + Y_{ptrs2}}{2}$$

$$X_{ptrs\_R2} = \frac{Y_{ptrs2} + M_{SC}}{2}$$

Formula 3

Herein, $M_{SC}$ indicates a quantity of subcarriers included in the SCP-DFT-s-OFDM symbol.

Considering that relative locations of PTRSs in R1 and R2 are consistent after a duplicate block replication operation is performed, an average value of the relative locations of the PTRSs may be calculated and used as a final relative location of the PTRSs, so that the PTRS locations are more even. For example, $X_{ptrs\_mean}$ is used to represent the average value of the relative locations of the PTRSs, and $X_{ptrs\_mean}$ may meet Formula 4.

$$X_{ptrs\_mean} = \frac{(M_{SC} - X_{ptrs\_R2}) + (M_{SC} - K - X_{ptrs\_R1})}{2}$$

Formula 4

Herein, K represents a value of a location parameter K of the duplicate block.

$X_{ptrs\_R1\_final}$ is used to represent a final PTRS location in R1, $X_{ptrs\_R2\_final}$ is used to represent a final PTRS location in R2, and $X_{ptrs\_R1\_final}$ and $X_{ptrs\_R2\_final}$ may meet Formula 5.

$$X_{ptrs\_R1\_final} = \lfloor M_{SC} - K - X_{ptrs\_mean} \rfloor$$

$$X_{ptrs\_R2\_final} = \lfloor M_{SC} - X_{ptrs\_mean} \rfloor$$

Formula 5

Herein, $\lfloor \ \rfloor$ indicates rounding down. It should be understood that, in this embodiment of this application, an example in which the rounding manner is rounding down is mainly used for description. This is not limited herein. For example, another rounding manner may be used, for example, rounding up or rounding off. Details are not described again below.

As shown in FIG. 8, the location of the PTRS in the duplicate block that is redefined according to the solution 1-1 corresponds to a black block in updated location distribution (or may also be referred to as a new pattern (new pattern)). It can be learned that, compared with the original location distribution, the updated location distribution indicates that PTRS distribution (or PTRS group distribution) is more even, interpolation distances are more appropriate, and corresponding phase noise estimation and compensation performance are better.

FIG. 8 is an example for description. Location distribution of the PTRS designed based on the solution 1-1 may be distribution shown in the updated location distribution in FIG. 8, or may be other location distribution, and may be specifically determined based on the pattern parameter of the PTRS and the location of the duplicate block.

Based on the foregoing solution 1-1, a PTRS pattern design scheme for the SCP-DFT-s-OFDM is provided. The initial location of the PTRS is determined based on the pattern parameter of the PTRS, and whether a conflict exists between the duplicate block and the initial location of the PTRS is determined based on the value of K and the value of R. If the duplicate block does not conflict with the initial location of the PTRS, the PTRS is generated by using the current PTRS pattern (that is, the target location of the PTRS is the initial location of the PTRS). If the duplicate block conflicts

17

with the initial location of the PTRS, the PTRS pattern is redefined. According to the solution 1-1, location distribution of the PTRS outside the duplicate block remains unchanged, and location distribution of the PTRS in the duplicate block is re-determined by using the quantity of conflict PTRS groups in the duplicate block. For example, location distribution of the PTRS in the duplicate block is re-determined based on a principle of evenly allocating time domain resources, and relative locations of PTRSs in R1 and R2 remain consistent. In this way, overall location distribution of the PTRS can be more appropriate, and interpolation distances are more even, thereby reducing impact of relatively poor performance caused by uneven interpolation distance intervals in PTRS phase noise estimation, improving PTRS phase noise estimation and compensation performance, improving demodulation performance, and improving spectral efficiency.

The foregoing describes the solution 1-1, and the following describes a solution 1-2. For parameters involved in the solution 1-2, refer to descriptions in the solution 1-1. Details are not described below again.

Solution 1-2: A PTRS location in the duplicate block remains unchanged, and a PTRS location outside the duplicate block is redefined.

According to the solution 1-2, in a possible distribution manner, PTRSs outside the duplicate block are evenly distributed. In updated location distribution shown in FIG. 9, location distribution of the PTRS outside the duplicate block is even.

When the location of the duplicate block conflicts with the initial location of the PTRS, the location of the PTRS outside the duplicate block may be redefined, and location distribution of the PTRS in the duplicate block remains unchanged. In this way, overall PTRS location allocation is more appropriate, interpolation distances are more even, impact of poor performance caused by uneven interpolation distances on PTRS phase noise estimation is reduced, PTRS phase noise estimation and compensation performance are improved, demodulation performance is improved, and spectral efficiency is improved.

In a possible implementation, PTRSs outside the duplicate block may be evenly distributed, to obtain better interpolation distances and better phase noise estimation performance. The following is described with reference to FIG. 9.

For example, FIG. 9 is a schematic diagram of determining the target location of the PTRS based on the solution 1-2.

As shown in FIG. 9, an initial location of the PTRS is determined based on a pattern parameter of the PTRS. After a duplicate block replication operation is performed, the initial location of the PTRS becomes original location distribution (or may be referred to as an old pattern) shown in FIG. 9. A location of the PTRS in R1 is shown by a black block. Interpolation distances of this pattern are not even. Consequently, PTRS phase noise estimation and compensation performance deteriorate, system performance is affected, and spectral efficiency is reduced. Therefore, the location of the PTRS outside the duplicate block may be re-determined by using the solution 1-2. Re-determining the location of the PTRS outside the duplicate block may include the following steps.

(1) Determine spacing between PTRS groups outside the duplicate block.

For description, in this embodiment of this application, x is used to represent spacing between PTRS groups.

For example, x is determined based on K, R, and the quantity of conflicts $N_{group}^{conflict}$. As shown in FIG. 9, a time domain resource outside the duplicate block is ($M_{SC}$ - 2R), a quantity of PTRS groups outside the duplicate block is ($CN - 2 * N_{group}^{conflict}$), and ($CN - 2 * N_{group}^{conflict}$) PTRS groups are allocated in ($M_{SC}$ - 2R). For example, the spacing x of the ($CN - 2 * N_{group}^{conflict}$) PTRS groups meets Formula 6.

$$x = \left( M_{SC} - 2R \right) / \left( CN - 2 * N_{group}^{conflict} \right)$$

Formula 6

FIG. 9 is used as an example. $N_{group}^{conflict} = 1$, and Formula 6 may be transformed into $x = (M_{SC} = 2R)/(CN - 2)$.

(2) Determine a quantity of PTRS groups within a range of D1 and a quantity of PTRS groups within a range of D2.

The location outside the duplicate block includes at least two ranges: a range before a PTRS in a first duplicate block and a range between PTRSs in a plurality of duplicate blocks. For differentiation, the range of D1 and the range of D2 are used for description. The range of D1 represents the range before the PTRS in the first duplicate block. As shown in FIG. 9, the range of D1 represents a range on the left side of the PTRS in R1, that is, a range of [$M_{SC}$ - K]. The range of D2 represents a range between PTRSs in the plurality of duplicate blocks. As shown in FIG. 9, the range of D2 represents a range of spacing between a PTRS in R1 and a PTRS in R2, that is, a range of [K-R]. For differentiation, $N_{group}^{\left[M_{sc}-K\right]}$ is used to represent a quantity of PTRS groups within a range of [Msc - K] (that is, a quantity of PTRS groups within the range of D1), and $N_{group}^{\left[K-R\right]}$ is used to represent a quantity of PTRS groups within the range of [K-R] (that is, a quantity of PTRS groups within the range of D2).

For example, the quantity of PTRS groups outside the duplicate block may be determined based on a CN (that is, a total quantity of PTRS groups), a quantity of conflict PTRS groups in the duplicate block, and values of the range of D1 and the range of D2. For example, the quantity of PTRS groups $N_{group}^{\left[M_{sc}-K\right]}$ within the range of D1 and the quantity of PTRS groups $N_{group}^{\left[K-R\right]}$ within the range of D2 meet Formula 7.

$$N_{group}^{\left[M_{sc}-K\right]} = \left\lfloor \frac{M_{SC}-K}{\left(M_{SC}-2R\right)/\left(CN-2*N_{group}^{conflict}\right)} \right\rfloor$$

$$N_{group}^{\left[K-R\right]} = \frac{K-R}{\left(M_{SC}-2R\right)/\left(CN-2*N_{group}^{conflict}\right)} = CN-2*N_{group}^{conflict}-N_{group}^{\left[M_{sc}-K\right]}$$

Formula 7

Herein,

$$\left(M_{SC}-2R\right)/\left(CN-2*N_{group}^{conflict}\right) = x \, .$$

FIG. 9 is used as an example. It can be seen that, $N_{group}^{conflict}=1$, $N_{group}^{\left[M_{sc}-K\right]}=5$, and $N_{group}^{\left[K-R\right]}=1$. In other words, one PTRS group needs to be placed in each of the duplicate blocks R1 and R2, five PTRS groups are placed within the range of D1, and one PTRS group is placed within the range of D2.

(3) Determine the final location of the PTRS outside the duplicate block.

The final location of the PTRS outside the duplicate block is determined based on the spacing x determined in (1) and the quantity of PTRS groups within the range of D1 and the quantity of PTRS groups within the range of D2 determined in (2).

For example, as shown in FIG. 9, $N_{group}^{\left[M_{sc}-K\right]}$ PTRS groups are evenly distributed within the range of D1, and $N_{group}^{\left[K-R\right]}$ PTRS groups are evenly distributed within the range of D2.

When the final location of the PTRS outside the duplicate block is determined, the location of the PTRS in the duplicate block may be considered. For example, PTRS groups distributed at equal spacing are prevented from falling within the duplicate block. As shown in FIG. 9, when PTRS groups (that is, blocks filled with "X" shadows) distributed at equal spacing within the range of D2 fall within R2, the PTRS group may be disposed outside R2, for example, disposed outside R2 closest to the location.

As shown in FIG. 9, it can be learned that, compared with original location distribution, updated location distribution indicates that PTRS distribution (or PTRS group distribution) is more even, interpolation distances are more appropriate, and corresponding phase noise estimation and compensation performance are better.

FIG. 9 is an example for description. Location distribution of the PTRS designed based on the solution 1-2 may be distribution shown in the updated location distribution in FIG. 9, or may be other location distribution, and may be specifically determined based on the pattern parameter of the PTRS and the location of the duplicate block.

Based on the foregoing solution 1-2, a PTRS pattern design scheme for the SCP-DFT-s-OFDM is provided. The initial location of the PTRS is determined based on the pattern parameter of the PTRS, and whether a conflict exists between the duplicate block and the initial location of the PTRS is determined based on the value of K and the value of R. If the duplicate block does not conflict with the initial location of the PTRS, the PTRS is generated by using a current PTRS pattern (that is, the target location of the PTRS is the initial location of the PTRS). If the duplicate block conflicts with the initial location of the PTRS, the PTRS pattern is redefined. According to the solution 1-2, location distribution of the PTRS in the duplicate block remains unchanged, and location distribution of the PTRS out the duplicate block is re-determined. For example, location distribution of the PTRS outside the duplicate block is re-determined based on a principle of evenly allocating time domain resources, and when the location of the PTRS outside the duplicate block is determined, the location of the PTRS in the duplicate block is considered to determine an equal-division range. In this way, overall location distribution of the PTRS can be more appropriate, and interpolation distances are more even, thereby reducing impact of relatively poor performance caused by uneven interpolation distance intervals in PTRS phase noise estimation, improving PTRS phase noise estimation and compensation performance, improving demodulation performance, and improving spectral efficiency.

The foregoing separately describes the solution 1-1 and the solution 1-2. In the foregoing solutions, location distribution of the PTRS in the duplicate block remains unchanged, and location distribution of the PTRS outside the duplicate block is re-determined. Alternatively, location distribution of the PTRS outside the duplicate block remains unchanged, and location distribution of the PTRS in the duplicate block is re-determined. When the location of the duplicate block conflicts with the initial location of the PTRS, location distribution of the PTRS in the SCP-DFT-s-OFDM symbol may also be re-determined. The following provides description with reference to a solution 1-3.

Solution 1-3: The target location of the PTRS in the SCP-DFT-s-OFDM symbol is redesigned.

Based on the solution 1-3, when the location of the duplicate block conflicts with the initial location of the PTRS, location distribution of the PTRS in the SCP-DFT-s-OFDM symbol may be re-determined. For example, any solution in the implementation 2 may be used for implementation. The following provides description with reference to the implementation 2.

The implementation 1 is described in detail above, and the implementation 2 is described below. For parameters related to the solution in the implementation 2, refer to the description in the foregoing implementation 1. Details are not described herein again.

In the implementation 2, the target location of the PTRS is directly determined based on the pattern parameter of the PTRS and the location parameter of the duplicate block.

Based on the implementation 2, the target location of the PTRS may be directly determined based on the pattern parameter of the PTRS and the location parameter of the duplicate block.

The following describes several possible solutions.

Solution 2-1: The PTRS is not in the duplicate block, but outside the duplicate block.

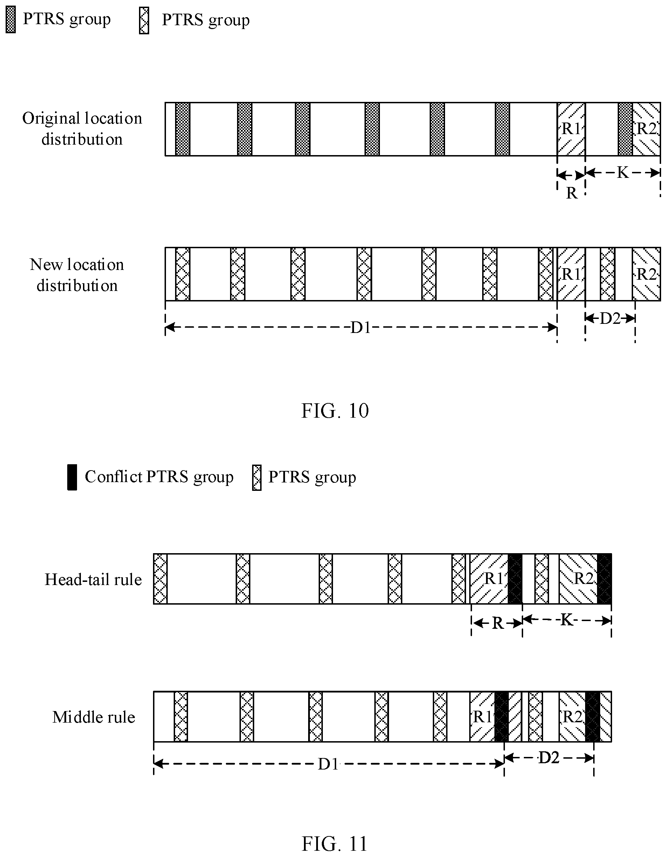

According to the solution 2-1, in a possible distribution manner, the duplicate block do not include a PTRS, and PTRSs outside the duplicate block are evenly distributed. In updated location distribution shown in FIG. 10, location distribution of the PTRSs outside the duplicate block is even.

The PTRS is designed not to fall within the duplicate block, that is, the PTRS is not placed in the duplicate block, so that a location conflict between the duplicate block and the PTRS can be avoided.

For example, FIG. 10 is a schematic diagram of determining the target location of the PTRS based on the solution 2-1.

As shown in FIG. 10, in original location distribution, R1 conflicts with the PTRS, and R2 does not conflict with the PTRS group. After a duplicate block replication operation is performed, one PTRS group is missing from the entire SCP-DFT-s-OFDM symbol, thereby affecting performance of phase noise estimation and compensation. Therefore, the solution 2-1 may be used to avoid placing a PTRS in the duplicate block, to avoid a missing PTRS group.

For the locations of the PTRSs outside the duplicate block, in a possible implementation, the locations of the PTRSs outside the duplicate block may be evenly distributed (or distributed at even spacing). Determining the location of the PTRS outside the duplicate block may include the following steps.

(1) Determine spacing x between PTRS groups outside the duplicate block.

For example, x is determined based on K, R, and (CN, CS). A time domain resource outside the duplicate block is $(M_{SC} - 2R)$, a quantity of PTRS groups outside the duplicate block is CN, and CN PTRS groups are evenly distributed in $(M_{SC} - 2A)$. For example, spacing x between the CN PTRS groups meets, for example, Formula 8.

$$x = \left(M_{SC} - 2R\right)\big/CN$$

Formula 8

(2) Determine the quantity of PTRS groups within the range of D1 and the quantity of PTRS groups within the range of D2.

As shown in FIG. 10, there is no PTRS in the duplicate block. For example, the range of D1 is used to represent a range on the left side of R1, that is, the range of D1 is used to represent a range of $[M_{SC} - K - R]$, and the range of D2 is used to represent a range between R1 and R2, that is, the range of D2 is used to represent a range of $[K-R]$. For differentiation, $N_{group}^{\left[M_{sc}-K-R\right]}$ is used to represent a quantity of PTRS groups within a range of $[M_{SC} - K - R]$ (that is, the quantity of PTRS groups within the range of D1), and $N_{group}^{[K-R]}$ is used to represent a quantity of PTRS groups within the range of $[K-R]$ (that is, the quantity of PTRS groups within the range of D2).

For example, the quantity of PTRS groups within the range of D1 and the quantity of PTRS groups within the range of D2 may be determined based on CN, and values of the range of D1 and the range of D2. For example, the quantity of PTRS groups $N_{group}^{\left[M_{sc}-K-R\right]}$ within the range of D1 and the quantity of PTRS groups $N_{group}^{[K-R]}$ within the range of D2 meet Formula 9.

$$N_{group}^{\left[M_{sc}-K-R\right]} = \left\lfloor \frac{(M_{SC}-K-R)}{(M_{SC}-2R)/CN} \right\rfloor$$

$$N_{group}^{[K-R]} = \frac{(K-R)}{(M_{SC}-2R)/CN} = CN - N_{group}^{\left[M_{sc}-K-R\right]}$$

Formula 9

FIG. 10 is used as an example. It can be seen that, $N_{group}^{\left[M_{sc}-K-R\right]} = 7$ and $N_{group}^{[K-R]} = 1$.

(3) The final location of the PTRS outside the duplicate block (that is, the target location of the PTRS) is determined.

The target location of the PTRS is determined based on the spacing x determined in (1) and the quantity of PTRS groups within the range of D1 and the quantity of PTRS groups within the range of D2 determined in (2).

For example, as shown in FIG. 10, $N_{group}^{\left[M_{sc}-K-R\right]}$ PTRS groups are evenly distributed within the range of D1, and $N_{group}^{[K-R]}$ PTRS groups are evenly distributed within the range of D2. As shown in FIG. 10, it can be learned that, compared with original location distribution, updated location distribution indicates that PTRS distribution (or PTRS group distribution) is more even, and interpolation distances are more appropriate.

FIG. 10 is an example for description. Location distribution of the PTRS designed based on the solution 2-1 may be distribution shown in the updated location distribution in FIG. 10, or may be other location distribution, and may be specifically determined based on the pattern parameter of the PTRS and the location of the duplicate block.

Based on the foregoing solution 2-1, a PTRS pattern design scheme for the SCP-DFT-s-OFDM is provided. According to the solution 2-1, the PTRS does not fall within the duplicate block, and the PTRSs (or PTRS groups) are evenly distributed outside the duplicate block at equal spacing. In this way, impact of PTRS performance deterioration caused by a conflict between the duplicate block and the PTRS can be reduced, so that PTRSs in the SCP-DFT-s-OFDM symbol are distributed more evenly, and better interpolation distances are provided. Therefore, phase noise compensation performance is better, and data demodulation performance and spectral efficiency can be better.

Solution 2-2: Location distribution of the PTRS in the duplicate block and location distribution of the PTRS outside the duplicate block are separately determined.

According to the solution 2-2, in a possible distribution manner, in the duplicate block, relative locations of PTRSs are consistent, and PTRSs outside the duplicate block are evenly distributed, as shown in FIG. 11.

The location distribution of the PTRS in the duplicate block and the location distribution of the PTRS outside the duplicate block are separately determined. In this way, evenness of PTRS spacing can also be optimized, and data demodulation performance in a phase noise condition can be improved.

For example, FIG. 11 is a schematic diagram of determining the target location of the PTRS based on the solution 2-2.

As shown in FIG. 11, in original location distribution, after a duplicate block replication operation is performed, PTRS locations are unevenly distributed. This may affect interpolation performance and phase noise estimation performance. Therefore, the solution 2-2 may be used to separately determine the location distribution of the PTRS in the duplicate block and the location distribution of the PTRS outside the duplicate block.

In a possible implementation, relative locations of the PTRSs in the duplicate block are consistent, and/or PTRSs outside the duplicate block are evenly distributed. That the relative locations of the PTRSs remain consistent in the duplicate block indicates that a location of a PTRS in each duplicate block is consistent with the location of the duplicate block. As shown in FIG. 11, a PTRS distributed according to a head-tail rule is located at the tail location in R1, and is also located at the tail location in R2; and a PTRS distributed according to a middle rule is located at the middle location in R1, and is also located at the middle location in R2. For the head-tail rule and the middle rule, refer to the foregoing descriptions. Details are not described herein again.

Separately determining the location distribution of the PTRS within the duplicate block and the location distribution of the PTRS outside the duplicate block may include the following steps.

(1) Determining the quantity of PTRS groups in the duplicate block.

The location of the PTRS in the duplicate block may be first determined. For example, relative locations of the PTRSs in the duplicate block are consistent before a duplicate block replication operation is performed. After the location of the PTRS in the duplicate block is determined, the location of the PTRS outside the duplicate block is determined. For example, the PTRS is evenly distributed outside the duplicate block according to the foregoing rule (for example, the head-tail rule or the middle rule).

For example, the quantity of PTRS groups in the duplicate block may be determined based on spacing $x$ between PTRS groups, where $x = M_{SC}/CN$. $N_{group}^{[R]}$ is used to represent the quantity of PTRS groups in the duplicate block, and $N_{group}^{[R]}$ meets, for example, Formula 10.

$$N_{group}^{[R]} = R/x = \left\lfloor (R * CN)/M_{SC} \right\rfloor$$

Formula 10

(2) Determine the location of the PTRS in the duplicate block.

The location of the PTRS in the duplicate block may be determined based on a pattern parameter (CN, CS) of the PTRS.

The foregoing head-tail rule and the middle rule are used as examples.

In a possible case, it is determined, based on (CN, CS), that the PTRS is distributed according to the head-tail rule. Based on this case, it may be determined that the first PTRS group is mapped to the head of the first gap, and the last PTRS group is mapped to the tail of the last gap. In other words, it is determined that the last PTRS (that is, the PTRS in R2) is located at the tail of R2. If the relative locations of the PTRSs in the duplicate block are consistent, the PTRS in R1 is also located at the tail location of R1, for example, distribution corresponding to the head-tail rule in FIG. 11. For example, in this case, the PTRS outside the duplicate block may also be distributed according to the head-tail rule, for example, distribution corresponding to the head-tail rule in FIG. 11. The location of the PTRS outside the duplicate block is a head location of each gap.

In still another possible case, it is determined, based on (CN, CS), that the PTRS is distributed according to the middle rule. Based on this case, it may be determined that each PTRS group is mapped to a middle location of each gap, and then it may be determined that the last PTRS (that is, the PTRS in R2) is located in the middle location of R2. If the relative locations of the PTRSs in the duplicate block are consistent, the PTRS in R1 is also located in a middle location of R1, as shown in distribution corresponding to the middle rule in FIG. 11. For example, in this case, the PTRS outside the duplicate block may also be distributed according to the middle rule, for example, distribution corresponding to the middle rule in FIG. 11. The PTRS outside the duplicate block is located in the middle location of each gap.

It should be understood that the foregoing mainly uses the head-tail rule and the middle rule as examples for description, and this is not limited herein. For example, another PTRS distribution rule is also applicable to this embodiment of this application.

(3) Determine the quantity of PTRS groups within the range of D1 and the quantity of PTRS groups within the range of D2.

As shown in FIG. 11, the range of D 1 represents a range on the left side of a PTRS in R1, and the range of D2 represents a range of spacing between the PTRS in R1 and a PTRS in R2. $N_{group}^{D1}$ and $N_{group}^{D2}$ are respectively used to represent the quantity of PTRS groups within the range of D1 and the quantity of PTRS groups within the range of D2.

According to the head-tail rule, $N_{group}^{D1}$ and $N_{group}^{D2}$ may meet, for example, Formula 11.

$$N_{group}^{D1} = \left\lfloor \frac{(M_{SC} - K - R)}{(M_{SC}/CN)} \right\rfloor$$

$$N_{group}^{D2} = CN - 2 * N_{group}^{[R]} - N_{group}^{D1}$$

Formula 11

According to the middle rule, $N_{group}^{D1}$ and $N_{group}^{D2}$ may meet, for example, Formula 12.

$$N_{group}^{D1} = \left\lfloor \frac{(M_{SC} - K - R/2)}{(M_{SC}/CN)} \right\rfloor$$

$$N_{group}^{D2} = CN - 2 * N_{group}^{[R]} - N_{group}^{D1}$$

Formula 12

(4) Determine the final location of the PTRS outside the duplicate block.

The target location of the PTRS is determined based on the quantity $N_{group}^{D1}$ of PTRS groups within the range of D1 and the quantity $N_{group}^{D2}$ of PTRS groups within the range of D2 determined in (3).

In a possible implementation, the PTRSs are evenly distributed within the range of D1 and D2. When the final location of the PTRS outside the duplicate block is determined, the location of the PTRS in the duplicate block may be considered. For example, PTRS groups distributed at equal spacing are prevented from falling within the duplicate block. For example, for a PTRS distributed according to the head-tail rule, if a location of the PTRS within the range of D2 falls within a range of the duplicate block R2, the PTRS group may be set outside R2, for example, set outside R2 closest to the location.

FIG. 11 is an example for description. Location distribution of the PTRS designed based on the solution 2-2 may be the location distribution shown in FIG. 11, or may be other location distribution, and may be specifically determined based on the pattern parameter of the PTRS and the location of the duplicate block.

Based on the foregoing solution 2-2, a PTRS pattern design scheme for the SCP-DFT-s-OFDM is provided. The location distribution of the PTRS in the duplicate block and the location distribution of the PTRS outside the duplicate block may be separately determined. For example, spacing between PTRS locations and a placement rule are determined based on (CN, CS), and the quantity of PTRS groups in the duplicate block and the quantity of PTRS groups outside the duplicate block are determined. The PTRS is distributed in the duplicate block based on the quantity of PTRS groups in the duplicate block and the placement rule. For example, before a duplicate block replication operation is performed, relative locations of PTRSs in the duplicate block are consistent (that is, a location of the PTRS in R1 relative to R1 and a location of the PTRS in R2 relative to R2). The PTRS is distributed outside the duplicate block based on the quantity of PTRS groups outside the duplicate block and the placement rule. For example, the PTRSs outside the duplicate block are distributed at equal spacing. Therefore, evenness of PTRS spacing can be optimized, and data demodulation performance in a phase noise condition can be improved.

The foregoing describes two possible implementations with reference to the implementation 1 and the implementation 2. The following briefly describes a possible procedure applicable to the foregoing implementations.

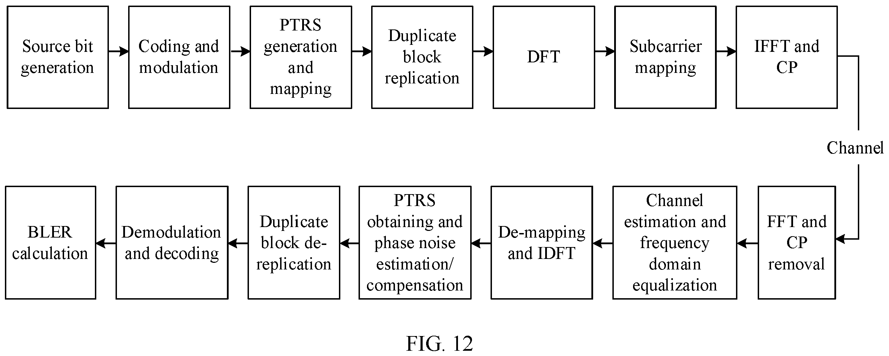

For example, FIG. 12 shows a possible signal processing process applicable to an embodiment of this application.

As shown in FIG. 12, a processing process of a transmitting end may include: generating a source bit, performing channel coding and modulation on the source bit, performing PTRS generation and location mapping, performing duplicate block replication, performing DFT, performing subcarrier mapping, performing IFFT and CP addition, and then sending the source bit through a channel. The location mapping indicates mapping between a data QAM symbol and a PTRS QAM symbol before a DFT operation is performed. The PTRS generation and location mapping operations may be performed based on any solution in the foregoing implementation 1 or any solution in the foregoing implementation 2. For example, the location of the PTRS is determined based on any solution in the foregoing implementation 1 or any solution in the foregoing implementation 2, a corresponding SCP-DFT-s-OFDM symbol is generated and is sent.

A processing process of a receiving end may include: performing FFT and CP removal, frequency domain channel estimation and equalization, de-mapping and IDFT, PTRS obtaining and phase noise estimation/compensation, duplicate block de-replication, demodulation and decoding, and block error rate (block error rate, BLER) calculation. The PTRS obtaining and phase noise estimation/compensation may be performed based on any solution in the foregoing implementation 1 or any solution in the foregoing implementation 2. For example, the PTRS is received based on the location of the PTRS determined based on any solution in the foregoing implementation 1 or any solution in the foregoing implementation 2, and phase noise estimation and compensation are performed to complete data demodulation.

It should be understood that the process described in FIG. 12 is an example, and is not limited herein. For example, the transmitting end may first perform a duplicate block replication operation, and then perform a PTRS generation and location mapping operation. Correspondingly, the receiving end first performs a duplicate block de-replication operation, and then performs a PTRS obtaining and phase noise estimation/compensation operation. In this case, the location of the PTRS is determined after the location of the duplicate block is determined, so that a conflict between the location of the PTRS and the location of the duplicate block can also be avoided.

In the foregoing two implementations, a problem of a conflict between the duplicate block and the PTRS is mainly resolved from a perspective of determining distribution of the locations of the PTRS in the duplicate block and/or outside the duplicate block. The following describes two implementations from a perspective of the quantity of PTRS groups and/or the quantity of sampling points per PTRS group and a perspective of symbol processing. It should be understood that any implementation described below may be combined with the foregoing implementation 1 (for example, may be used in combination with the solution 1-1 in the implementation 1, or may be used in combination with the solution 1-2 in the implementation 1), or may be combined with the foregoing implementation 2 (for example, may be used in combination with the solution 2-1 in the implementation 2, or may be used in combination with the solution 2-2 in the implementation 2), or may be used independently. This is not limited herein.

Implementation 3: A PTRS in the duplicate block is added.

According to the implementation 3, for example, a target quantity of the PTRS within the location range of the duplicate block is determined based on an initial quantity and a preset value, the initial quantity is determined based on the pattern parameter of the PTRS, and the preset value is an integer greater than 1 or equal to 1. The preset value may be, for example, one or more predefined values, and a proper value may be determined from the one or more values based on an actual communication status. Alternatively, the preset value may be a value configured by the network device. This is not limited herein.

A PTRS in the duplicate block is added, so that duplicate block utilization is increased, and a phase noise tracking capability is improved. Considering that a PTRS in the duplicate block is added, symbols used for transmitting a data block may be reduced. Therefore, performance and resource consumption may be balanced based on an actual communication status.

Adding a PTRS in the duplicate block may include, for example, adding the quantity of PTRS groups in the duplicate block, and/or adding the quantity of sampling points per PTRS group in the duplicate block.

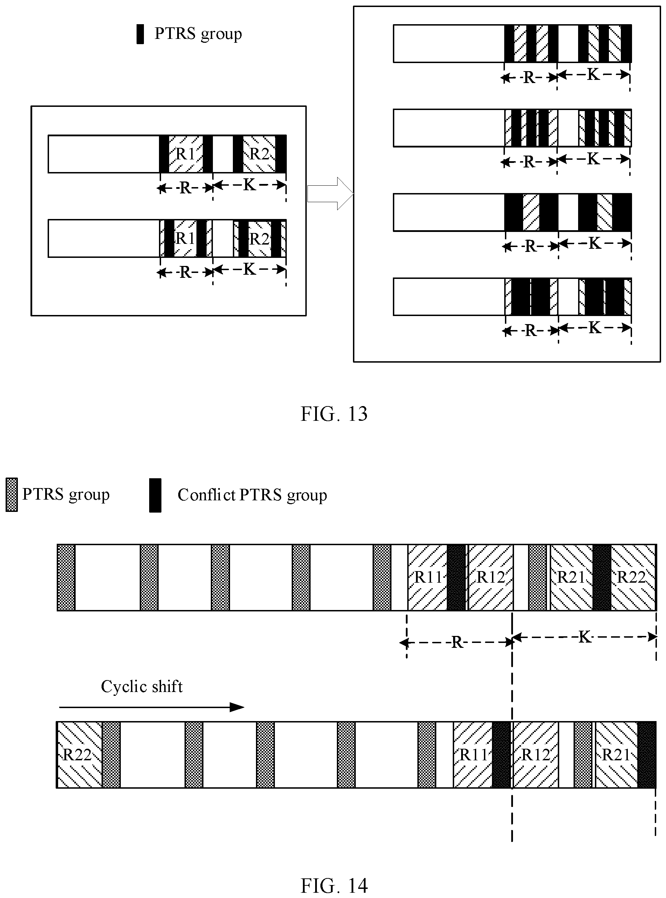

For example, FIG. 13 is a schematic diagram of determining the target location of the PTRS based on the implementation 3.

As shown in FIG. 13, it is assumed that the quantity of PTRS groups in the duplicate block (that is, R1 and R2) is 2.

In a possible implementation, the quantity of PTRS groups in the duplicate block may be added. For example, a preset value (for example, denoted as N1) of a quantity of PTRS groups is added to each duplicate block, where N1 is an integer greater than 1 or equal to 1. As shown in (1) and (2) in FIG. 13, a quantity of PTRS groups (that is, N1=1) is added to R1 and R2 respectively, and the quantity of PTRS groups in the duplicate block changes to 3. It should be understood that N1=1 is an example for description, and this is not limited herein. A location of a quantity of PTRS groups added to the duplicate block may be, for example, evenly distributed with an original quantity of PTRS groups. This is not limited herein.

In still another possible implementation, a quantity of PTRS sampling points in the duplicate block may be added. For example, a preset value (for example, denoted as N2) of a quantity of PTRS sampling points is added to each PTRS group in each duplicate block, where N2 is an integer greater than 1 or equal to 1. As shown in (3) and (4) in FIG. 13, the quantity of PTRS sampling points in R1 and R2 is increased.

Based on the implementation 3, a PTRS pattern design scheme for the SCP-DFT-s-OFDM is provided. A quantity of PTRS groups in the duplicate block and/or a quantity of sampling points per PTRS group may be added, so that a quantity of PTRSs in the duplicate block may be added. In this way, duplicate block utilization can be increased, a phase noise tracking capability can be improved, and data demodulation performance can be improved.

Implementation 4: Relative locations of the PTRS and the duplicate block in the SCP-DFT-s-OFDM symbol remain unchanged, and a cyclic shift and/or frequency-domain weighting processing is performed on the SCP-DFT-s-OFDM symbol.

Based on the implementation 4, a cyclic shift (or time domain cyclic shift) and/or frequency domain weighting may be performed on the symbol.

For example, FIG. 14 is a schematic diagram of determining the target location of the PTRS based on the implementation 4.

FIG. 14 may be, for example, the location distribution of PTRSs obtained according to any one of the foregoing implementations 1 to 3. R1 is divided into R11 and R12, and R2 is divided into R21 and R22.

In a possible manner, cyclic shift processing is performed on a symbol, so that R22 is located at a symbol header, R21 is located at a symbol tail, and R11 and R12 are respectively located before and after a location of the value of K. In this case, a cyclic shift of a same step is also correspondingly performed on the location of the PTRS, to remain a relative location of the PTRS and a relative location of the duplicate block unchanged.

In addition, frequency domain weighting processing may be further performed. For example, the transmitting end may perform frequency domain weighting processing after DFT, and the receiving end may perform frequency domain weighting after performing channel estimation and equalization processing.

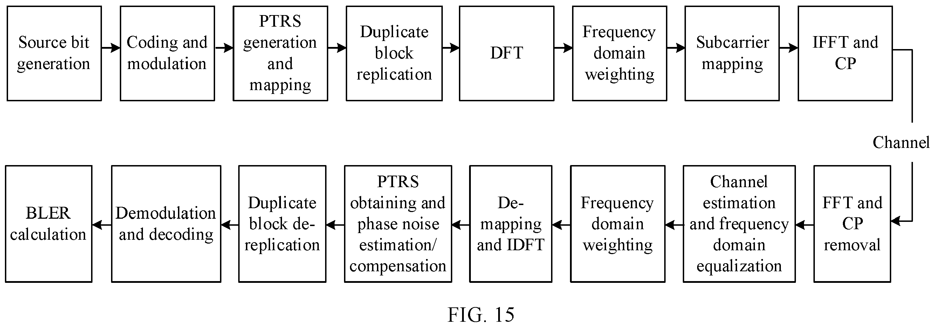

For example, FIG. 15 shows a flowchart of signal processing applicable to the implementation 4. As shown in FIG. 15, compared with the process shown in FIG. 12, a frequency domain weighting operation is added to the transmitting end and the receiving end. It may be understood that a frequency domain weighting function may be equivalent to a cyclic shift of a time domain signal.

Based on the implementation 4, a PTRS pattern design scheme for the SCP-DFT-s-OFDM is provided. The relative positions of the PTRS and the duplicate block remain unchanged, and a cyclic shift or frequency-domain weighting is performed on the symbol in the time domain, thereby reducing a filter smearing effect, improving adjacent channel leakage power ratio (adjacent channel leakage power ratio, ACLR) performance, and further improving system performance.

It may be understood that the implementation 1 to the implementation 4 may be used separately, or may be used in combination. For example, when the implementation 1 and the implementation 2 are used in combination, whether location distribution of the PTRS needs to be redefined may be first determined based on the implementation 1. When location distribution of the PTRS needs to be redefined, the implementation 2 may be used. For another example, when the implementation 3 is used in combination with the implementation 1 and/or the implementation 2, location distribution of the PTRS may be first determined based on the implementation 1 and/or the implementation 2, and then the quantity of PTRS groups in the duplicate block and/or the quantity of sampling points per PTRS group are/is added in the implementation 3. For another example, when the implementation 4 is used in combination with the implementation 1 and/or the implementation 2, location distribution of the PTRS may be first determined based on the implementation 1 and/or the implementation 2, and then a cyclic shift and/or frequency domain weighting processing are performed by using the implementation 4.

In addition, optionally, in actual communication, one or more of the foregoing implementations may also be determined to be used based on an actual communication status. For example, an appropriate implementation may be determined based on the pattern parameter of the PTRS and the location parameter of the duplicate block. For example, regardless of the values of the CN and CS, the foregoing implementation 3 is used. For another example, for a communication scenario in which CN=2 and CS=2, the foregoing implementation 3 is used. For another example, for a communication scenario in which CN=8 and CS=4, the solution 1-2 in the foregoing implementation 1 are used.

The foregoing describes the content of the aspect 1 with reference to the implementation 1 to the implementation 4. The following describes the content of the aspect 2.

According to the aspect 2, a pattern parameter of the reference signal and the location parameter of the duplicate block are described as follows.

For example, the reference signal is the PTRS, and parameters used to determine the target location of the PTRS include the pattern parameter of the PTRS and the location parameter of the duplicate block.

(1) Pattern parameter of the PTRS

As described in step 610, the pattern parameter of the PTRS indicates a parameter that can be used to determine location distribution of the PTRS in the SCP-DFT-s-OFDM symbol (or a pattern of the PTRS in the SCP-DFT-s-OFDM symbol). For example, the pattern parameter of the PTRS may include, for example, but is not limited to, the quantity of PTRS groups and/or the quantity of sampling points per PTRS group.

Obtaining the pattern parameter of the PTRS may be reading the pattern parameter of the PTRS locally, or may be receiving the pattern parameter of the PTRS from another device (or apparatus), or may be determining the pattern parameter of the PTRS with reference to received information and locally stored information (or information predefined in a protocol). It may be understood that any manner of obtaining the pattern parameter of the PTRS is applicable to this embodiment of this application.

In a possible implementation, the pattern parameter of the PTRS may be obtained based on a related communication protocol. For example, in a data transmission process, the network device configures a scheduled bandwidth for the terminal device, and both the network device and the terminal device determine the specific PTRS pattern parameter during current data transmission based on the scheduled bandwidth currently scheduled by the network device to the terminal device and Table 1. For a specific value of the scheduled bandwidth configured by the network device for the terminal device, for example, reference may be made to a stipulation in a related communication protocol. This is not limited herein.

The foregoing implementation is an example for description, and is not limited herein. For example, the network device may directly indicate the pattern parameter of the PTRS to the terminal device.

(2) Location parameter of the duplicate block

As described in step 610, the location parameter of the duplicate block represents a parameter that can be used to determine location distribution of the duplicate block in the target symbol. For example, the location parameter of the duplicate block may include: the value of K and/or the value of R.

As described above, a specific value of the value of R may be determined based on a channel delay. For example, if the channel delay is large, the network device configures a larger value of R for the terminal device. A specific value of the value of K may be determined based on a CP length. For example, the value of K meets Formula 13.

$$K = \lfloor CP / N * M \rfloor$$

Formula 13

Herein, N is a quantity of IFFT points, and M is a quantity of DFT points.

Obtaining the location parameter of the duplicate block may be reading the location parameter of the duplicate block locally, or may be receiving the location parameter of the duplicate block from another device (or apparatus), or may be determining the location parameter of the duplicate block with reference to received information and locally stored information (or information predefined in a protocol). It may be understood that any manner in which the location parameter of the duplicate block can be obtained is applicable to this embodiment of this application.

The network device may locally determine the location parameter of the duplicate block. The following mainly describes a manner in which the terminal device obtains the location parameter of the duplicate block.

In a first possible implementation, the network device may directly indicate the location parameter of the duplicate block to the terminal device.

For example, the network device indicates the value of K and the value of R to the terminal device. The terminal device may determine the values of K and R based on an indication of the network device.

For another example, the network device indicates the value of R to the terminal device. The terminal device may determine the value of R based on an indication of the network device. The value of K may be determined by the terminal device based on a length of the CP and with reference to Formula 13.

For another example, the network device indicates the value of K to the terminal device. The terminal device may determine the value of K based on an indication of the network device. The value of R may be determined by the terminal device based on a parameter or information (for example, denoted as a parameter #A) related to R. For example, the parameter #A may be a parameter related to a channel delay, different channel delays may correspond to different parameters #A, and different parameters #A may correspond to different values of R.

In a second possible implementation, the network device may indirectly indicate the location parameter of the duplicate block to the terminal device.

For example, the network device indicates the length of the CP to the terminal device. The terminal device may determine the value of K based on the length of the CP and with reference to Formula 13.

For another example, the network device indicates the parameter #A to the terminal device. The terminal device may determine the value of R based on the parameter #A and with reference to a relationship between the parameter #A and R.

For another example, the network device indicates the parameter #A and the length of the CP to the terminal device. The terminal device may determine the values of R and K based on the parameter #A and the length of the CP.

In a third possible implementation, the network device may directly indicate some location parameters of the duplicate block to the terminal device, and indirectly indicate some location parameters of the duplicate block.

For example, the network device indicates the length of the CP and the value of R to the terminal device. The terminal device may determine the value of K based on the length of the CP and with reference to Formula 13, and the terminal device may determine the value of R based on an indication of the network device.

For another example, the network device indicates the parameter #A and the value of K to the terminal device. The terminal device may determine the value of R based on the parameter #A and with reference to a relationship between the parameter #A and R, and the terminal device may determine the value of K based on an indication of the network device.

The foregoing separately describes the pattern parameter of the PTRS and the location parameter of the duplicate block.

It should be understood that a specific form of signaling that is used by the network device to notify the terminal device of the parameter used to determine the target location of the PTRS is not limited. For example, existing signaling may be reused to notify the terminal device of the parameter used to determine the target location of the PTRS. For another example, new signaling may be added, and the new signaling is used to notify the terminal device of the parameter used to determine the target location of the PTRS.

In this embodiment of this application, when a protocol predefines the parameter used to determine the target location of the PTRS, two types of parameters may be distinguished, or the two types of parameters may not be distinguished.

In a first possible design, the parameter used to determine the target location of the PTRS may exist independently in a form of two types of parameters.

For example, a type of parameter is the pattern parameter of the PTRS, and the pattern parameter of the PTRS exists in the manner in Table 1. In a data transmission process, the pattern parameter of the PTRS may be determined based on a scheduled bandwidth configured by the network device and Table 1. The other type of parameter is the location parameter of the duplicate block. For example, the location parameter of the duplicate block may also be predefined in a manner similar to that in Table 1. For example, a table of a correspondence between the CP and K may be predefined, as shown in Table 3. For example, a table of a correspondence between the parameter #A and R may be further predefined, as shown in Table 4.

Table 3

| CP | K |
|------|------|
| CP#1 | K#1 |
| CP#2 | K#2 |
| CP#3 | K#3 |

In Table 3, CP#1, CP#2, and CP#3 are used to distinguish between different CPs, and for example, may represent CPs of different lengths, or may be CPs of different length ranges, or may be CPs of different types. This is not limited herein. K#1, K#2, and K#3 are used to distinguish between different Ks. For example, values of Ks are different. In a data transmission process, corresponding K may be determined based on a table of a correspondence between the CP and K (as shown in Table 3) and the length of the CP. For example, assuming that the length of the CP configured by the network device for the terminal device is CP#1, the network device may determine, based on CP#1, that the value of K is K#1; and the terminal device may determine, based on CP#1 configured by the network device, that the value of K is K#1.

**Table 4**

| Parameter #A | R |
|----------------|------|
| Parameter #A #1 | R#1 |
| Parameter #A #2 | R#2 |
| Parameter #A #3 | R#3 |

In Table 4, the parameter #A #1, the parameter #A #2, and the parameter #A #3 are used to distinguish between different parameters #A. R#1, R#2, and R#3 are used to distinguish between different Rs. For example, values of Rs are different. In a data transmission process, corresponding R may be determined based on a table of a correspondence between the parameter #A and R (as shown in Table 4) and the parameter #A. For example, assuming that the parameter #A configured by the network device for the terminal device is the parameter #A #1, the network device may determine, based on the parameter #A #1, that the value of R is R#1; and the terminal device may determine, based on the parameter #A #1 configured by the network device, that the value of R is R#1.

It should be understood that the foregoing steps are merely an example for description, and this is not limited. Any variation of Table 3 or Table 4 is applicable to the scope of this embodiment of this application. For example, a same parameter corresponds to K and R, and corresponding K and R may be determined based on a correspondence between the parameter and each of K and R.

In a second possible design, the parameter used to determine the target location of the PTRS may not be distinguished between two types of parameters. In other words, the two types of parameters may exist in a table. For example, Table 1 is adjusted, that is, a correspondence between the scheduled bandwidth and teach of the value of K and R is added to Table 1. In a data transmission process, a corresponding pattern parameter of the PTRS and a corresponding location parameter of the duplicate block may be determined based on a table.

In this embodiment of this application, location distribution of the PTRS in the SCP-DFT-s-OFDM symbol may be determined based on a table similar to Table 2. The following describes two possible designs by using an example in which the target location of the PTRS is determined based on the solution 2-1.

In a first possible design, Table 2 may be supplemented, so that the design is not only applicable to determining location distribution of the PTRS in the DFT-s-OFDM symbol, but also applicable to determining location distribution of the PTRS in the SCP-DFT-s-OFDM symbol. For example, the target location of the PTRS is determined based on the solution 2-1. When an index m of the PTRS is determined, a parameter $M_{SC}$ within the range of D1 is updated to $M_{SC}$ = $M_{SC}$ - K - R, and CN is updated to $CN = N_{group}^{\left[ M_{SC} - K - R \right]}$ ; and a parameter $M_{SC}$ in the range of D2 is updated to $M_{SC}$ = K - R, and CN is updated to $CN = N_{group}^{\left[ K-R \right]}$ . m=m+Msc-K. Table 5 and Table 6 show a manner of determining the index m of the PTRS when the target location of the PTRS is determined based on the solution 2-1.

**Table 5**

| Quantity of PTRS groups | Quantity of sampling points per PTRS group | Index m of PTRS samples in OFDM symbol _l_ prior to transform precoding |
|---|---|---|
| 2 | 2 | A duplicate block does not conflict with a PTRS: $$s\left\lfloor M_{SC}^{PUSCH}/4 \right\rfloor + k - 1 \qquad \text{where } s = 1,3 \text{ and } k = 0,1$$ A duplicate block conflicts with a PTRS: |
| | | $$(1).\ s\left\lfloor \left(M_{SC}^{PUSCH} - K - R\right)/4 \right\rfloor + k - 1 \qquad \text{where } s = 1,3 \text{ and } k = 0,1 \text{ and}$$ $$N_{group}^{\left[M_{sc}^{-K-R}\right]} = \left\lfloor \frac{\left(M_{SC}^{PUSCH} - K - R\right)}{\left(M_{SC}^{PUSCH} - 2R\right)/N_{group}^{PT-RS}} \right\rfloor = 2$$ $$(2).\ s\left\lfloor \left(M_{SC}^{PUSCH} - K - R\right)/2 \right\rfloor + k - 1 \qquad \text{where } s = 1 \text{ and } k = 0,1 \text{ and}$$ $$N_{group}^{\left[M_{sc}^{-K-R}\right]} = \left\lfloor \frac{\left(M_{SC}^{PUSCH} - K - R\right)}{\left(M_{SC}^{PUSCH} - 2R\right)/N_{group}^{PT-RS}} \right\rfloor = 1;$$ $$s\left\lfloor (K - R)/4 \right\rfloor + M_{SC}^{PUSCH} - K + k - 1 \qquad \text{where } s = 1 \text{ and } k = 0,1$$ $$(3).\ s\left\lfloor (K - R)/4 \right\rfloor + M_{SC}^{PUSCH} - K + k - 1 \qquad \text{where } s = 1,3 \text{ and } k = 0,1$$ and $$N_{group}^{\left[M_{sc}^{-K-R}\right]} = \left\lfloor \frac{\left(M_{SC}^{PUSCH} - K - R\right)}{\left(M_{SC}^{PUSCH} - 2R\right)/N_{group}^{PT-RS}} \right\rfloor = 0$$ |
| 2 | 4 | A duplicate block does not conflict with a PTRS: $$sM_{SC}^{PUSCH} + k \qquad \text{where} \qquad \begin{cases} s = 0 \text{ and } k = 0,1,2,3 \\ s = 1 \text{ and } k = -4,-3,-2,-1 \end{cases}$$ A duplicate block conflicts with a PTRS |

| Quantity of PTRS groups | Quantity of sampling points per PTRS group | Index m of PTRS samples in OFDM symbol $l$ prior to transform precoding |
|---|---|---|
| | | $sM_{SC}^{PUSCH} + k$     where $s = 0$ and $k = 0, 1, 2, 3$ <br><br> $s\left(M_{SC}^{PUSCH} - R\right) + k$     $s = 1$ and $k = -4, -3, -2, -1$ |
| 4 | 2 | A duplicate block does not conflict with a PTRS: <br><br> $s\left\lfloor M_{SC}^{PUSCH}/8 \right\rfloor + k - 1$     where $s = 1, 3, 5, 7$ and $k = 0,1$ <br><br> A duplicate block conflicts with a PTRS: <br><br> $$\text{Range of } D1 = \left[0, M_{SC}^{PUSCH} - K - R\right]:$$ <br><br> $$s\left\lfloor \left(M_{SC}^{PUSCH} - K - R\right)\bigg/\left(N_{group}^{[M_{sc}^{-K-R}]} * 2\right)\right\rfloor + k - 1 \qquad where$$ <br><br> $$s = 2n - 1, n = \left[1, N_{group}^{[M_{sc}^{-K-R}]}\right] \qquad and \ k = 0,1$$ <br><br> $$\text{Range of } D2 = \left[M_{SC}^{PUSCH} - K, M_{SC}^{PUSCH} - R\right]:$$ <br><br> $$s\left\lfloor (K - R)\bigg/\left(N_{group}^{[K-R]} * 2\right)\right\rfloor + k - 1 + M_{SC}^{PUSCH} - K \qquad where$$ <br><br> $$s = 2n - 1, n = \left[1, N_{group}^{[K-R]}\right] \qquad and \ k = 0,1$$ |
| 4 | 4 | A duplicate block does not conflict with a PTRS: <br><br> $sM_{SC}^{PUSCH}/4 + n + k$     where |

| Quantity of PTRS groups | Quantity of sampling points per PTRS group | Index m of PTRS samples in OFDM symbol *l* prior to transform precoding |
|---|---|---|
| | | $$\begin{cases} s=0 \ and \ k=0,1,2,3 & n=0 \\ s=1,2 \ and \ k=-2,-1,0,1 & n=\left\lfloor M_{SC}^{PUSCH}/8 \right\rfloor \\ s=4 \ and \ k=-4,-3,-2,-1 & n=0 \end{cases}$$ A duplicate block conflicts with a PTRS: $$\text{Range of } D1=\left[0, M_{SC}^{PUSCH}-K-R\right]:$$ $$\textit{where}$$ $$s\left(M_{SC}^{PUSCH}-K-R\right)\Big/ N_{group}^{\left[M_{sc}-K-R\right]}+n+k$$ $$\begin{cases} s=0 \ and \ k=0,1,2,3 & n=0 \\ s=\left[1, N_{group}^{\left[M_{sc}-K-R\right]}\right) \ and \ k=-2,-1,0,1 & n=\left\lfloor \left(M_{SC}^{PUSCH}-K-R\right)\Big/ 2N_{group}^{\left[M_{sc}-K-R\right]}\right\rfloor \\ s=N_{group}^{\left[M_{sc}-K-R\right]} \ and \ k=-4,-3,-2,-1 & n=0 \end{cases}$$ $$\text{Range of } D2=\left[M_{SC}^{PUSCH}-K, M_{SC}^{PUSCH}-R\right]:$$ $$\textit{where}$$ $$s\left(K-R\right)\Big/ N_{group}^{[K-R]}+n+k+M_{SC}^{PUSCH}-K$$ $$\begin{cases} s=0 \ and \ k=0,1,2,3 & n=0 \\ s=\left[1, N_{group}^{[K-R]}\right) \ and \ k=-2,-1,0,1 & n=\left\lfloor \left(K-R\right)\Big/ 2N_{group}^{[K-R]}\right\rfloor \\ s=N_{group}^{[K-R]} \ and \ k=-4,-3,-2,-1 & n=0 \end{cases}$$ |
| 8 | 4 | A duplicate block does not conflict with a PTRS: |

EP 4 336 786 A1

| Quantity of PTRS groups | Quantity of sampling points per PTRS group | Index m of PTRS samples in OFDM symbol *l* prior to transform precoding |
|---|---|---|
| | | $\left\lfloor sM_{SC}^{PUSCH}/8 \right\rfloor + n + k$     *where* <br><br> $\begin{cases} s=0 \ and \ k=0,1,2,3 & n=0 \\ s=1,2,3,4,5,6 \ and \ k=-2,-1,0,1 & n=\left\lfloor M_{SC}^{PUSCH}/16 \right\rfloor \\ s=8 \ and \ k=-4,-3,-2,-1 & n=0 \end{cases}$ <br><br> A duplicate block conflicts with a PTRS: <br><br> $$\text{Range of D1} = \left[ 0, M_{SC}^{PUSCH} - K - R \right]$$ <br><br> $s\left(M_{SC}^{PUSCH}-K-R\right)\Big/ N_{group}^{\left[M_{sc}-K-R\right]} + n + k$    *where* <br><br> $\begin{cases} s=0 \ and \ k=0,1,2,3 & n=0 \\ s=\left[1, N_{group}^{\left[M_{sc}-K-R\right]}\right) \ and \ k=-2,-1,0,1 & n=\left\lfloor \left(M_{SC}^{PUSCH}-K-R\right)\Big/2N_{group}^{\left[M_{sc}-K-R\right]} \right\rfloor \\ s=N_{group}^{\left[M_{sc}-K-R\right]} \ and \ k=-4,-3,-2,-1 & n=0 \end{cases}$ <br><br> $$\text{Range of D2} = \left[ M_{SC}^{PUSCH}-K, M_{SC}^{PUSCH}-R \right]:$$ <br><br> $s(K-R)\Big/N_{group}^{[K-R]} + n + k + M_{SC}^{PUSCH} - K$    *where* <br><br> $\begin{cases} s=0 \ and \ k=0,1,2,3 & n=0 \\ s=\left[1, N_{group}^{[K-R]}\right) \ and \ k=-2,-1,0,1 & n=\left\lfloor (K-R)\Big/2N_{group}^{[K-R]} \right\rfloor \\ s=N_{group}^{[K-R]} \ and \ k=-4,-3,-2,-1 & n=0 \end{cases}$ |

**Table 6**

| Location parameter of the duplicate block (K and/or R) | Quantity of PTRS groups | Quantity of sampling points per PTRS group | Index m of PTRS samples in OFDM symbol $l$ prior to transform precoding |
|---|---|---|---|
| K#1 and/or R#1 | 2 | 2 | A duplicate block does not conflict with a PTRS: $$s\left\lfloor M_{SC}^{PUSCH}\big/4\right\rfloor + k - 1 \qquad \text{where } s = 1,3 \text{ and } k = 0,1$$ A duplicate block conflicts with a PTRS: $$(1).\ s\left\lfloor \left(M_{SC}^{PUSCH} - K - R\right)\big/4\right\rfloor + k - 1 \qquad \text{where } s = 1,3 \text{ and } k = 0,1 \text{ and}$$ $$N_{group}^{\left[M_{sc}-K-R\right]} = \left\lfloor \frac{\left(M_{SC}^{PUSCH} - K - R\right)}{\left\lfloor \left(M_{SC}^{PUSCH} - 2R\right)\big/N_{group}^{PT-RS}\right\rfloor}\right\rfloor = 2$$ $$(2).\ s\left\lfloor \left(M_{SC}^{PUSCH} - K - R\right)\big/2\right\rfloor + k - 1 \qquad \text{where } s = 1 \text{ and } k = 0,1 \text{ and}$$ $$N_{group}^{\left[M_{sc}-K-R\right]} = \left\lfloor \frac{\left(M_{SC}^{PUSCH} - K - R\right)}{\left\lfloor \left(M_{SC}^{PUSCH} - 2R\right)\big/N_{group}^{PT-RS}\right\rfloor}\right\rfloor = 1;$$ $$s\left\lfloor \left(K - R\right)\big/4\right\rfloor_{-} + M_{SC}^{PUSCH} - K + k - 1 \qquad \text{where } s = 1 \quad k = 0,1 \text{ and}$$ $$(3).\ s\left\lfloor \left(K - R\right)\big/4\right\rfloor + M_{SC}^{PUSCH} - K + k - 1 \qquad \text{where } s = 1,3 \text{ and}$$ and $$N_{group}^{\left[M_{sc}-K-R\right]} = \left\lfloor \frac{\left(M_{SC}^{PUSCH} - K - R\right)}{\left\lfloor \left(M_{SC}^{PUSCH} - 2R\right)\big/N_{group}^{PT-RS}\right\rfloor}\right\rfloor = 0$$ |

33

(continued)

| Location parameter of the duplicate block (K and/or R) | Quantity of PTRS groups | Quantity of sampling points per PTRS group | Index m of PTRS samples in OFDM symbol *l* prior to transform precoding |
|---|---|---|---|
| K#2 and/or R#2 | 2 | 4 | A duplicate block does not conflict with a PTRS: $$sM_{SC}^{PUSCH}+k$$ where $$\begin{cases} s=0 \ and \ k=0,1,2,3 \\ s=1 \ and \ k=-4,-3,-2,-1 \end{cases}$$ A duplicate block conflicts with a PTRS: $$sM_{SC}^{PUSCH}+k$$ where *s* = 0 and *k* = 0, 1, 2, 3 $$s\left(M_{SC}^{PUSCH}-R\right)+k$$ *s* = 1 and *k* = -4, -3, -2, -1 |
| K#3 and/or R#3 | 4 | 2 | A duplicate block does not conflict with a PTRS: $$s\left\lfloor M_{SC}^{PUSCH}/8\right\rfloor+k-1$$ where *s* = 1, 3, 5, 7 and *k* = 0,1 A duplicate block conflicts with a PTRS: $$\text{Range of D1}=\left[0,M_{SC}^{PUSCH}-K-R\right]:$$ $$s\left\lfloor \left(M_{SC}^{PUSCH}-K-R\right)\middle/\left(N_{group}^{[M_{sc}-K-R]}*2\right)\right\rfloor+k-1$$ where $$s=2n-1,n=\left[1,N_{group}^{[M_{sc}-K-R]}\right]$$ and *k* = 0,1 $$\text{Range of D2}=\left[M_{SC}^{PUSCH}-K,M_{SC}^{PUSCH}-R\right]$$ $$s\left\lfloor \left(K-R\right)\middle/\left(N_{group}^{[K-R]}*2\right)\right\rfloor+k-1+M_{SC}^{PUSCH}-K$$ where $$s=2n-1,n=\left[1,N_{group}^{[K-R]}\right]$$ and *k* = 0,1 |

| Location parameter of the duplicate block (K and/or R) | Quantity of PTRS groups | Quantity of sampling points per PTRS group | Index m of PTRS samples in OFDM symbol *l* prior to transform precoding |
|---|---|---|---|
| K#4 and/or R#4 | 4 | 4 | A duplicate block does not conflict with a PTRS: $$sM_{SC}^{PUSCH}\big/4 + n + k \quad where$$ $$\begin{cases} s=0 \ and \ k=0,1,2,3 & n=0 \\ s=1,2 \ and \ k=-2,-1,0,1 & n=\left\lfloor M_{SC}^{PUSCH}\big/8 \right\rfloor \\ s=4 \ and \ k=-4,-3,-2,-1 & n=0 \end{cases}$$ A duplicate block conflicts with a PTRS: $$Range \ of \ D1 = \left[ 0, M_{SC}^{PUSCH} - K - R \right]:$$ where $$s\left(M_{SC}^{PUSCH} - K - R\right)\Big/ N_{group}^{\left[M_{sc}-K-R\right]} + n + k$$ $$\begin{cases} s=0 \ and \ k=0,1,2,3 & n=0 \\ s=\left[1, N_{group}^{\left[M_{sc}-K-R\right]}\right) \ and \ \begin{cases} k=-2,-1,0,1 \\ n=\left\lfloor \left(M_{SC}^{PUSCH}-K-R\right)\Big/2N_{group}^{\left[M_{sc}-K-R\right]}\right\rfloor \end{cases} \\ s=N_{group}^{\left[M_{sc}-K-R\right]} \ and \ k=-4,-3,-2,-1 & n=0 \end{cases}$$ $$Range \ of \ D2 = \left[ M_{SC}^{PUSCH} - K, M_{SC}^{PUSCH} - R \right]:$$ where $$s\left(K-R\right)\Big/ N_{group}^{\left[K-R\right]} + n + k + M_{SC}^{PUSCH} - K$$ |

| Location parameter of the duplicate block (K and/or R) | Quantity of PTRS groups | Quantity of sampling points per PTRS group | Index m of PTRS samples in OFDM symbol *l* prior to transform precoding |
|---|---|---|---|
| | | | $\begin{cases} s = 0 \ and \ k = 0,1,2,3 & n = 0 \\ s = \left[1, N_{group}^{[K-R]}\right) \ and \ k = -2,-1,0,1 & n = \left\lfloor (K-R)\middle/ 2N_{group}^{[K-R]}\right\rfloor \\ s = N_{group}^{[K-R]} \ and \ k = -4,-3,-2,-1 & n = 0 \end{cases}$ |
| K#5 and/or R#5 | 8 | 4 | A duplicate block does not conflict with a PTRS: $\left\lfloor sM_{SC}^{PUSCH}\middle/8\right\rfloor + n + k$ where $\begin{cases} s = 0 \ and \ k = 0,1,2,3 & n = 0 \\ s = 1,2,3,4,5,6 \ and \ k = -2,-1,0,1 & n = \left\lfloor M_{SC}^{PUSCH}\middle/16\right\rfloor \\ s = 8 \ and \ k = -4,-3,-2,-1 & n = 0 \end{cases}$ A duplicate block conflicts with a PTRS: Range of $D1 = \left[0, M_{SC}^{PUSCH} - K - R\right]$: $s\left(M_{SC}^{PUSCH} - K - R\right)\middle/ N_{group}^{[M_{sc}-K-R]} + n + k$ where $s = 0 \ and \ k = 0,1,2,3 \qquad n = 0$ $s = \left[1, N_{group}^{[M_{sc}-K-R]}\right) \ and \ \begin{cases} k = -2,-1,0,1 \\ n = \left\lfloor \left(M_{SC}^{PUSCH} - K - R\right)\middle/ 2N_{group}^{[M_{sc}-K-R]}\right\rfloor \end{cases}$ $s = N_{group}^{[M_{sc}-K-R]} \ and \ k = -4,-3,-2,-1 \quad n = 0$ Range of $D2 = \left[M_{SC}^{PUSCH} - K, M_{SC}^{PUSCH} - R\right]$ where $s(K-R)\middle/ N_{group}^{[K-R]} + n + k + M_{SC}^{PUSCH} - K$ |

EP 4 336 786 A1

(continued)

| Location parameter of the duplicate block (K and/or R) | Quantity of PTRS groups | Quantity of sampling points per PTRS group | Index m of PTRS samples in OFDM symbol *l* prior to transform precoding |
|---|---|---|---|
| | | | $\begin{cases} s=0 \ and \ k=0,1,2,3 & n=0 \\ s=\left[1,N_{group}^{[K-R]}\right) \ and \ k=-2,-1,0,1 & n=\left\lfloor (K-R)\big/2N_{group}^{[K-R]}\right\rfloor \\ s=N_{group}^{[K-R]} \ and \ k=-4,-3,-2,-1 & n=0 \end{cases}$ |

Table 5 is used as an example. In a data transmission process, the index m of the PTRS may be determined based on the quantity of PTRS groups and the quantity of sampling points per PTRS group in Table 5. For example, it is assumed that the quantity of PTRS groups is 4, and the quantity of sampling points per PTRS group is 2. If the duplicate block does not conflict with the PTRS, a location of the PTRS in each gap (that is, mapping is performed based on the initial location of the PTRS) may be determined based on a formula corresponding to that the duplicate block does not conflict with the PTRS. If the duplicate block conflicts with the PTRS, a location of the PTRS in each gap may be determined based on a formula corresponding to that the duplicate block conflicts with the PTRS (for example, based on a quantity of PTRS groups distributed in the ranges of D1 and D2 after the duplicate block is avoided, location spacing between PTRS groups distributed in the ranges of D1 and D2 are the same. For example, if the quantity of PTRS groups distributed in the range of D1 is 3, the quantity of PTRS groups distributed in the range of D2 is 1, three PTRS groups may be evenly distributed in the range of D1, and one PTRS group may be placed in the middle of the range of D2).

It should be understood that Table 5 and Table 6 are two possible examples, and this is not limited herein. Any variation of Table 5 or Table 6 is applicable to the scope of this embodiment of this application.

In a second possible design, Table 2 may not be modified, and a table similar to Table 7 is provided.

For example, when the target location of the PTRS is determined based on the solution 2-1, the index m of the PTRS may be determined based on Table 7, that is, a location of the PTRS in each gap is determined.

For another example, when the implementation 1 is used in combination with the solution 2-1 in the implementation 2, that is, whether the duplicate block conflicts with the PTRS is first determined, and when the duplicate block conflicts with the PTRS, the target location of the PTRS is determined based on the solution 2-1. In this case, if the duplicate block conflicts with the PTRS, the index m of the PTRS may be determined based on Table 7, that is, a location of the PTRS in each gap is determined based on Table 7. If the duplicate block does not conflict with the PTRS, the PTRS is mapped based on the initial location of the PTRS. For example, the initial location of the PTRS may be determined based on Table 2.

**Table 7**

| Quantity of PTRS groups | Quantity of sampling points per PTRS group | Index m of PTRS samples in OFDM symbol *l* prior to transform precoding |
|---|---|---|
| 2 | 2 | $(1).\ s\left\lfloor \left(M_{SC}^{PUSCH} - K - R\right)\big/4 \right\rfloor + k - 1$    *where s = 1,3 and k = 0,1 and* <br><br> $N_{group}^{\left[M_{sc}^{-K-R}\right]} = \left\lfloor \dfrac{\left(M_{SC}^{PUSCH} - K - R\right)}{\left(M_{SC}^{PUSCH} - 2R\right)\big/N_{group}^{PT-RS}} \right\rfloor = 2$ <br><br> $(2).\ s\left\lfloor \left(M_{SC}^{PUSCH} - K - R\right)\big/2 \right\rfloor + k - 1$    *where s = 1 and k = 0,1 and* <br><br> $N_{group}^{\left[M_{sc}^{-K-R}\right]} = \left\lfloor \dfrac{\left(M_{SC}^{PUSCH} - K - R\right)}{\left(M_{SC}^{PUSCH} - 2R\right)\big/N_{group}^{PT-RS}} \right\rfloor = 1;$ <br><br> $s\left\lfloor (K - R)\big/4 \right\rfloor + M_{SC}^{PUSCH} - K + k - 1$    *where s = 1 and k = 0,1* <br><br> $(3).\ s\left\lfloor (K - R)\big/4 \right\rfloor + M_{SC}^{PUSCH} - K + k - 1$    *where s = 1,3 and k = 0,1* <br><br> *and* $N_{group}^{\left[M_{sc}^{-K-R}\right]} = \left\lfloor \dfrac{\left(M_{SC}^{PUSCH} - K - R\right)}{\left(M_{SC}^{PUSCH} - 2R\right)\big/N_{group}^{PT-RS}} \right\rfloor = 0$ |
| 2 <br><br><br> 4 | 4 <br><br><br> 2 | $sM_{SC}^{PUSCH} + k$    *where s = 0 and k = 0, 1, 2, 3* <br><br> $s\left(M_{SC}^{PUSCH} - R\right) + k$    *s = 1 and k = -4, -3, -2, -1* <br><br> Range of D1 $= \left[0, M_{SC}^{PUSCH} - K - R\right]$: <br><br> $s\left\lfloor \left(M_{SC}^{PUSCH} - K - R\right)\big/\left(N_{group}^{\left[M_{sc}^{-K-R}\right]} * 2\right) \right\rfloor + k - 1$    *where* <br><br> $s = 2n - 1, n = \left[1, N_{group}^{\left[M_{sc}^{-K-R}\right]}\right]$    *and k = 0,1* |

(continued)

| Quantity of PTRS groups | Quantity of sampling points per PTRS group | Index m of PTRS samples in OFDM symbol *l* prior to transform precoding |
|---|---|---|
| | | Range of D2 $= \left[ M_{SC}^{PUSCH} - K, M_{SC}^{PUSCH} - R \right]$: <br><br> $$s\left\lfloor (K-R)\big/\left(N_{group}^{[K-R]} * 2\right) \right\rfloor + k - 1 + M_{SC}^{PUSCH} - K$$ <br> *and k* = 0,1   *where* <br><br> $$s = 2n-1, \; n = \left[1, N_{group}^{[K-R]}\right]$$ |
| 4 | 4 | Range of D1 $= \left[0, M_{SC}^{PUSCH} - K - R\right]$: <br> *where* <br><br> $$s\left(M_{SC}^{PUSCH} - K - R\right)\big/ N_{group}^{[M_{sc}-K-R]} + n + k$$ <br><br> $\begin{cases} s = 0 \; and \; k = 0,1,2,3 & n = 0 \\ s = \left[1, N_{group}^{[M_{sc}-K-R]}\right) \; and \; k = -2,-1,0,1 & n = \left\lfloor \left(M_{SC}^{PUSCH} - K - R\right)\big/ 2N_{group}^{[M_{sc}-K-R]} \right\rfloor \\ s = N_{group}^{[M_{sc}-K-R]} \; and \; k = -4,-3,-2,-1 & n = 0 \end{cases}$ <br><br> Range of D2 $= \left[M_{SC}^{PUSCH} - K, M_{SC}^{PUSCH} - R\right]$: <br> *where* <br><br> $$s(K-R)\big/ N_{group}^{[K-R]} + n + k + M_{SC}^{PUSCH} - K$$ <br><br> $\begin{cases} s = 0 \; and \; k = 0,1,2,3 & n = 0 \\ s = \left[1, N_{group}^{[K-R]}\right) \; and \; k = -2,-1,0,1 & n = \left\lfloor (K-R)\big/ 2N_{group}^{[K-R]} \right\rfloor \\ s = N_{group}^{[K-R]} \; and \; k = -4,-3,-2,-1 & n = 0 \end{cases}$ |
| 8 | 4 | Range of D1 $= \left[0, M_{SC}^{PUSCH} - K - R\right]$: |

(continued)

| Quantity of PTRS groups | Quantity of sampling points per PTRS group | Index m of PTRS samples in OFDM symbol $l$ prior to transform precoding |
|---|---|---|
| | | *where* $$s\left(M_{SC}^{PUSCH}-K-R\right)\Big/N_{group}^{\left[M_{sc}-K-R\right]}+n+k$$ $$s=0 \ and \ k=0,1,2,3 \qquad n=0$$ $$\cdot s=\left[1,N_{group}^{\left[M_{sc}-K-R\right]}\right) and \ k=-2,-1,0,1 \ n=\left\lfloor\left(M_{SC}^{PUSCH}-K-R\right)\Big/2N_{group}^{\left[M_{sc}-K-R\right]}\right\rfloor$$ $$s=N_{group}^{\left[M_{sc}-K-R\right]} and \ k=-4,-3,-2,-1 \quad n=0$$ $$\text{Range of D2}=\left[M_{SC}^{PUSCH}-K,M_{SC}^{PUSCH}-R\right]:$$ *where* $$s\left(K-R\right)\Big/N_{group}^{\left[K-R\right]}+n+k+M_{SC}^{PUSCH}-K$$ $$\begin{cases} s=0 \ and \ k=0,1,2,3 & n=0 \\ s=\left[1,N_{group}^{\left[K-R\right]}\right) and \ k=-2,-1,0,1 & n=\left\lfloor\left(K-R\right)\Big/2N_{group}^{\left[K-R\right]}\right\rfloor \\ s=N_{group}^{\left[K-R\right]} and \ k=-4,-3,-2,-1 & n=0 \end{cases}$$ |

41

It should be understood that Table 7 is a possible example, and this is not limited herein. Any variation of Table 7 is applicable to the scope of this embodiment of this application. For example, based on different solutions in the foregoing implementations, the formulas in Table 7 may be different. For another example, the first column and the second column in Table 7 may be replaced with location parameters of duplicate blocks. For another example, one or more columns may be further added to Table 7, and the one or more columns are used to indicate a location parameter of a duplicate block.

It should be understood that the aspect 1 and the aspect 2 may be used separately or used in combination. For example, during combined use, the pattern parameter of the PTRS and the location parameter of the duplicate block may be first determined based on the solution in the aspect 2, and then the target location of the PTRS is determined based on the solution in the aspect 1.

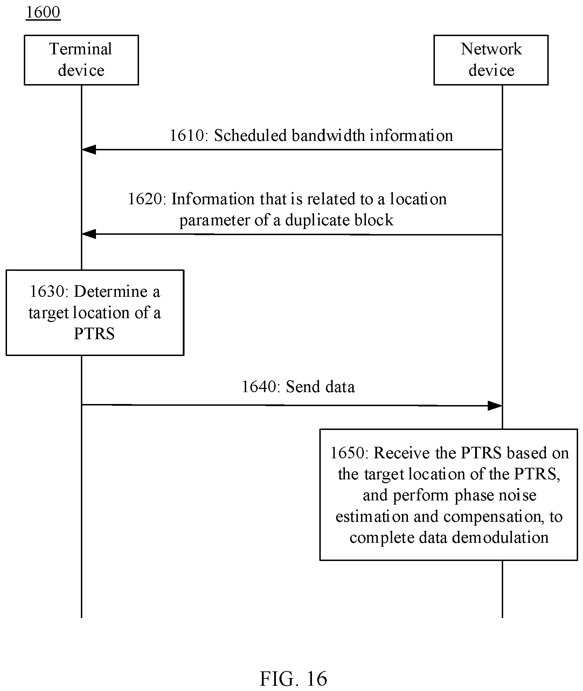

The foregoing describes this embodiment of this application from two aspects. For ease of understanding, an example in which a transmitting end device is a terminal device and a receiving end device is a network device is used. A possible process is provided with reference to FIG. 16.

For example, FIG. 16 is a schematic flowchart of a signal transmission method 1600 applicable to an embodiment of this application. The method 1600 may include the following steps.

1610: The network device sends scheduled bandwidth information to the terminal device.

Correspondingly, the terminal device receives the scheduled bandwidth information. The terminal device may determine a pattern parameter of a PTRS based on the scheduled bandwidth information.

Optionally, before step 1610, for example, the terminal device may report capability information to the network device, and the network device configures a scheduled bandwidth threshold for the terminal device based on the capability information reported by the terminal device, and sends the configured scheduled bandwidth threshold to the terminal device by using higher layer signaling.

1620: The network device sends information that is related to a location parameter of a duplicate block to the terminal device.

Correspondingly, the terminal device receives the information that is related to the location parameter of the duplicate block. The terminal device may determine the location parameter of the duplicate block based on the information that is related to the location parameter of the duplicate block. The network device may indicate the location parameter of the duplicate block to the terminal device in any one of the first possible implementation to the third possible implementation.

The first possible implementation is used as an example. For example, in step 1620, the information that is related to the location parameter of the duplicate block and that is sent by the network device to the terminal device may be, for example, a value of K and/or a value of R.

The second possible implementation as an example. For example, in step 1620, the information that is related to the location parameter of the duplicate block and that is sent by the network device to the terminal device may be, for example, a length of a CP and/or a parameter A.

The third possible implementation is used as an example. For example, in step 1620, the information that is related to the location parameter of the duplicate block and that is sent by the network device to the terminal device may be, for example, a length of a CP and/or a value of R, or may be, for another example, a value of K value and/or a parameter A.

It should be understood that there is no strict sequence between step 1620 and step 1610. For example, step 1610 may be performed before step 1620; or step 1620 may be performed before step 1610; or step 1610 and step 1620 may be performed synchronously. For example, the information that is related to the location parameter of the duplicate block and scheduled bandwidth information may be transmitted by using same signaling. This is not limited herein.

1630: The terminal device determines the target location of the PTRS.

The terminal device may determine the pattern parameter of the PTRS based on the scheduled bandwidth threshold that is configured by the network device for the terminal device and the scheduled bandwidth information. In addition, the terminal device may determine the location parameter of the duplicate block based on the information that is related to the location parameter of the duplicate block. The terminal device determines location distribution of the PTRS in an SCP-DFT-s-OFDM symbol (that is, the target location of the PTRS) based on the determined pattern parameter of the PTRS and the determined location parameter of the duplicate block and based on one or more implementations (that is, one or more of the implementation 1 to the implementation 4) in the foregoing aspect 1.

1640: The terminal device sends data to the network device.

The terminal device generates the corresponding SCP-DFT-s-OFDM symbol based on the location distribution of the PTRS in the SCP-DFT-s-OFDM symbol, and sends the data.

1650: The network device receives the PTRS based on the target location of the PTRS, and performs phase noise estimation and compensation, to complete data demodulation.

The network device may determine the location distribution of the PTRS in the SCP-DFT-s-OFDM symbol (that is, the target location of the PTRS) based on a same parameter (that is, the pattern parameter of the PTRS and the location parameter of the duplicate block) and a rule (for example, one or more implementations of the foregoing aspect 1). The network device receives the PTRS based on the determined target location, and performs phase noise estimation and compensation, to complete data demodulation.

It should be understood that in some of the foregoing embodiments, an SCP-DFT-s-OFDM symbol is mainly used as an example for description. This is not limited herein. Other types of symbols, for example, symbols including a duplicate block or symbols including a special data block, or some variant symbols of a DFT-s-OFDM symbol, are all applicable to this embodiment of this application. For example, some variant symbols of the DFT-s-OFDM symbol, for example, zero tail (zero tail, ZT)-CP-DFTs-OFDM (ZT-CP-DFTs-OFDM), ZT-DFTs-OFDM, zero head and zero tail (zero head and zero tail, ZHT)-DFTs-OFDM (ZHT-DFTs-OFDM), and a unique word (unique word, UW)-DFTs-OFDM (UW-DFTs-OFDM).

It should be further understood that in some of the foregoing embodiments, the duplicate block is mainly used as an example for description. This is not limited herein. Another type of data block, for example, a data block at an end location of a target symbol, a data block at a specific location in a target symbol, a data block replicated from another symbol in a target symbol, or a data block that conflicts with a location of a reference signal, is also applicable to this embodiment of this application.

It should be further understood that in some of the foregoing embodiments, the location of the PTRS is mainly used as an example for description. This is not limited herein. The location may also be replaced with a pattern or location distribution. For example, determining a location of the PTRS in the duplicate block may be replaced with determining a pattern of the PTRS in the duplicate block. For another example, remaining a location of the PTRS outside the duplicate block unchanged may be replaced with remaining a pattern of the PTRS outside the duplicate block unchanged.

It should be further understood that, in some of the foregoing embodiments, the PTRS (for example, the PTRS in R1 and the PTRS in R2) in the duplicate block is mentioned for a plurality of times. A person skilled in the art should understand a meaning of the PTRS, and the PTRS is used to indicate the location of the PTRS in the duplicate block or a location of the PTRS at a location of the duplicate block.

It should be further understood that in some of the foregoing embodiments, an example in which the reference signal is a PTRS is mainly used for description. This is not limited herein. Another reference signal may also be applicable to this embodiment of this application.

It should be further understood that the formulas used in embodiments of this application are examples for description, and do not limit the protection scope of embodiments of this application. In a process of calculating the foregoing related parameters, calculation may be performed based on the foregoing formula, or calculation may be performed based on a variation of the foregoing formula, or calculation may be performed based on a formula determined by using the method provided in embodiments of this application, or calculation may be performed in another manner to meet a result of calculation of the formula.

It should be further understood that rounding manners in the formulas in embodiments of this application are mainly described through rounding down as an example. This is not limited herein. Other rounding manners, for example, rounding up or rounding off, are all applicable to embodiments of this application.

It may be understood that, in the foregoing method embodiments, methods and operations implemented by a communication device (for example, a network device or a terminal device) may also be implemented by a component (for example, a chip or a circuit) that can be used in the communication device.

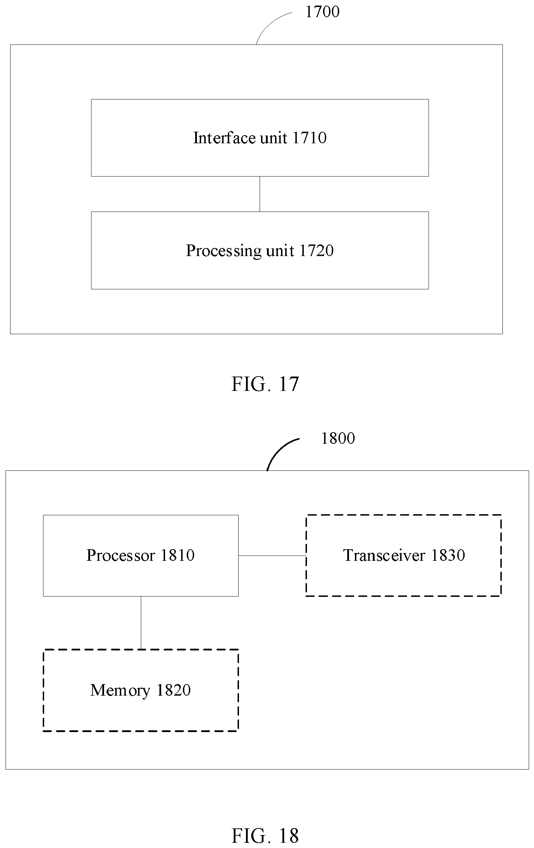

The foregoing describes in detail the method in this application with reference to FIG. 6 to FIG. 16. The following describes in detail an apparatus in this application with reference to FIG. 17 to FIG. 19. It should be understood that descriptions of apparatus embodiments correspond to the descriptions of the method embodiment. Therefore, for content that is not described in detail, refer to the foregoing method embodiment. For brevity, details are not described herein again.

FIG. 17 is a schematic block diagram of a communication apparatus 1700 according to an embodiment of this application. The communication apparatus 1700 includes an interface unit 1710 and a processing unit 1720. The interface unit 1710 may implement a corresponding communication function. The processing unit 1720 is used for data processing. The interface unit 1710 may also be referred to as a communication interface, a communication unit, or a transceiver unit. It should be understood that, unless otherwise specified, operations such as sending and receiving in this application may be more generally understood as operations such as output and input, instead of sending and receiving operations directly performed by a radio frequency circuit and an antenna, if the operations do not conflict with actual functions or internal logic of the operations in related descriptions.

Optionally, the apparatus 1700 may further include a storage unit. The storage unit may be configured to store instructions and/or data. The processing unit 1720 may read the instructions and/or data in the storage unit, to enable the apparatus to implement the foregoing method embodiments.

The apparatus 1700 may be configured to perform an action performed by the communication device (for example, a receiving end or a transmitting end) in the foregoing method embodiment. In this case, the apparatus 1700 may be a communication device or a component that can be configured in the communication device. The interface unit 1710 is configured to perform a receiving and sending-related operation on a communication device side in the foregoing method embodiment. The processing unit 1720 is configured to perform a processing-related operation on the communication device side in the foregoing method embodiment.

In a design, the apparatus 1700 is configured to perform an action performed by the receiving end in the foregoing method embodiment.

In a possible implementation, the processing unit 1720 is configured to determine a target location of a reference signal in a discrete Fourier transform-spread-orthogonal frequency division multiplexing DFT-s-OFDM symbol based on a pattern parameter of the reference signal and a location parameter of a data block, where the location parameter of the data block is used to determine a location of the data block in the DFT-s-OFDM symbol. The interface unit 1710 is configured to receive the reference signal at the target location.

In another design, the apparatus 1700 is configured to perform an action performed by the transmitting end in the foregoing method embodiment.

In a possible implementation, the processing unit 1720 is configured to map the reference signal to the target location in the discrete Fourier transform-spread-orthogonal frequency division multiplexing DFT-s-OFDM symbol, where the target location is determined based on the pattern parameter of the reference signal and the location parameter of the data block, and the location parameter of the data block is used to determine a location of the data block in the DFT-s-OFDM symbol. The interface unit 1710 is configured to send the DFT-s-OFDM symbol.

In some possible implementations of the apparatus 1700, the data block includes a data block replicated from a previous DFT-s-OFDM symbol adjacent to the DFT-s-OFDM symbol and a data block at an end of the DFT-s-OFDM symbol.

In some possible implementations of the apparatus 1700, when an initial location falls outside a location range of the data block, the target location is the initial location. When the initial location falls within the location range of the data block, the target location is different from the initial location. The initial location is a location that is of the reference signal in the DFT-s-OFDM symbol and that is determined based on the pattern parameter of the reference signal.

In some possible implementations of the apparatus 1700, when the initial location falls within the location range of the data block, a location of the reference signal within a first location range of the DFT-s-OFDM symbol is re-determined based on the initial location, and a location of the reference signal within a second location range of the DFT-s-OFDM symbol remains unchanged. The first location range represents the location range of the data block, and the second location range represents a location range other than the data block in the DFT-s-OFDM symbol. Alternatively, the first location range represents the location range other than the data block in the DFT-s-OFDM symbol, and the second location range represents the location range of the data block.

In some possible implementations of the apparatus 1700, the location of the reference signal within the first location range is re-determined based on a quantity of reference signals within the first location range and/or the location of the reference signal within the second location range.

In some possible implementations of the apparatus 1700, the data block includes a first data block and a second data block. The first location range represents the location range of the data block, the second location range represents the location range other than the data block in the DFT-s-OFDM symbol, and the location of the reference signal within the first location range meets the following formula:

$$N_1 = \left\lfloor \frac{M-K}{(M-2R)/(CN-2*N_{conflict})} \right\rfloor, \text{ and } N_2 = CN - 2*N_{conflict} - N_1.$$

Herein, $X_{R1}$ represents a location of the reference signal within a location range of the first data block, $X_{R2}$ represents a location of the reference signal within a location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers included in the DFT-s-OFDM symbol, CN represents a quantity of reference signals, $N_{conflict}$ represents a quantity of reference signals within the location ranges of the first data block and the second data block, and ⌊ ⌋ represents rounding down.

In some possible implementations of the apparatus 1700, the target location includes a location of the reference signal within the location range of the data block and a location of the reference signal within the location range other than the data block in the DFT-s-OFDM symbol. The location of the reference signal within the location range of the data block and the location of the reference signal within the location range other than the data block in the DFT-s-OFDM symbol are separately determined based on the pattern parameter of the reference signal.

In some possible implementations of the apparatus 1700, the DFT-s-OFDM symbol includes a plurality of data blocks, and locations of the reference signal within location ranges of all the data blocks are consistent. And/or spacing between locations of the reference signal within the location range other than the data block in the DFT-s-OFDM symbol is the same.

In some possible implementations of the apparatus 1700, the target location is located in the location range other than the data block in the DFT-s-OFDM symbol.

In some possible implementations of the apparatus 1700, a target quantity of reference signals within the location range of the data block is determined based on an initial quantity and a preset value, the initial quantity is determined based on the pattern parameter of the reference signal, and the preset value is an integer greater than 1 or equal to 1.

In some possible implementations of the apparatus 1700, the processing unit 1720 is further configured to perform a cyclic shift and/or frequency domain weighting processing on the DFT-s-OFDM symbol, where relative locations of the reference signal and the data block in the DFT-s-OFDM symbol remain unchanged.

In some possible implementations of the apparatus 1700, the reference signal is a phase tracking reference signal PTRS.

In some possible implementations of the apparatus 1700, a pattern parameter of the PTRS includes a quantity of PTRS groups and a quantity of PTRS sampling points per PTRS group.

In some possible implementations of the apparatus 1700, the location parameter of the data block includes the location of the data block in the DFT-s-OFDM symbol and a length of the data block in the DFT-s-OFDM symbol.

It should be understood that a specific process in which the modules perform the foregoing corresponding steps is described in detail in the foregoing method embodiments. For brevity, details are not described herein again.

The processing unit 1720 in the foregoing embodiment may be implemented by at least one processor or a processor-related circuit. The interface unit 1710 may be implemented by a transceiver or a transceiver-related circuit. The storage unit may be implemented by using at least one memory.

As shown in FIG. 18, an embodiment of this application further provides a communication apparatus 1800. The communication apparatus 1800 includes a processor 1810. The processor 1810 is coupled to a memory 1820. The memory 1820 is configured to store a computer program or instructions and/or data. The processor 1810 is configured to execute the computer program or instructions and/or data stored in the memory 1820, so that the methods in the foregoing method embodiments are executed.

Optionally, the apparatus 1800 includes one or more processors 1810.

Optionally, as shown in FIG. 18, the apparatus 1800 may further include the memory 1820.

Optionally, the apparatus 1800 may include one or more memories 1820.

Optionally, the memory 1820 may be integrated with the processor 1810, or separately disposed.

Optionally, as shown in FIG. 18, the apparatus 1800 may further include a transceiver 1830. The transceiver 1830 is configured to receive and/or send a signal. For example, the processor 1810 is configured to control the transceiver 1830 to receive and/or send a signal.

In a solution, the apparatus 1800 is configured to implement operations performed by the communication device (for example, a receiving end or a transmitting end) in the foregoing method embodiments.

For example, the processor 1810 is configured to implement processing-related operations in the foregoing method embodiment, and the transceiver 1830 is configured to implement receiving or sending related operations in the foregoing method embodiment.

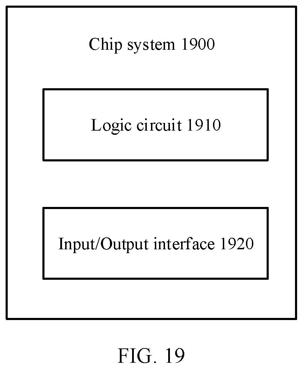

An embodiment of this application further provides a chip system 1900, as shown in FIG. 19. The chip system 1900 (or may be referred to as a processing system) includes a logic circuit 1910 and an input/output interface (input/output interface) 1920. The logic circuit is configured to be coupled to the input interface, and transmit a data parameter through the input/output interface, to perform the method in the foregoing method embodiment. A device in which the chip system 1900 is installed may implement the method and functions in embodiments of this application. For example, the logic circuit 1910 may be a processing circuit in the chip system 1900, to control a device in which the chip system 1900 is installed, or may be coupled to a storage unit, and invoke instructions in the storage unit, so that the device can implement the method and the function in embodiments of this application. The input/output interface 1920 may be an input/output circuit in the chip system 1900, to output information processed by the chip system 1900, or input to-be-processed data or signaling information to the chip system 1900 for processing.

In a solution, the chip system 1900 is configured to implement operations performed by the communication device (for example, a receiving end or a transmitting end) in the foregoing method embodiment.

For example, the logic circuit 1910 is configured to implement a processing-related operation performed by the receiving end in the foregoing method embodiment, and the input/output interface 1920 is configured to implement a receiving/sending-related operation performed by the receiving end in the foregoing method embodiment.

For another example, the logic circuit 1910 is configured to implement a processing-related operation performed by the transmitting end in the foregoing method embodiment, and the input/output interface 1920 is configured to implement a receiving/sending-related operation performed by the transmitting end in the foregoing method embodiment.

An embodiment of this application further provides a computer-readable storage medium. The computer-readable storage medium stores computer instructions used to implement the method performed by the communication device (for example, the receiving end or the transmitting end) in the foregoing method embodiment.

For example, when a computer program is executed by a computer, the computer is enabled to implement the method performed by the receiving end in the foregoing method embodiment.

For another example, when a computer program is executed by a computer, the computer is enabled to implement the method performed by the transmitting end in the foregoing method embodiment.

An embodiment of this application further provides a computer program product including instructions. When the instructions are executed by a computer, the computer is enabled to implement the method performed by the communication device (for example, the receiving end or the transmitting end) in the foregoing method embodiment.

An embodiment of this application further provides a communication system. The communication system includes the receiving end and the transmitting end in the foregoing embodiment.

For explanations and beneficial effects of related content of any one of the apparatuses provided above, refer to the corresponding method embodiment provided above. Details are not described herein again.

It should be understood that the processor in embodiments of this application may be a central processing unit (central processing unit, CPU), another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should be further understood that the memory mentioned in embodiments of this application may be a volatile memory and/or a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. As an example instead of a limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should further be noted that the memory described in this specification aims to include but is not limited to these memories and any memory of another proper type.

A person of ordinary skill in the art may be aware that, the units and steps in the examples described with reference to embodiments disclosed in this specification can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatus and method may be implemented in other manners. For example, the apparatus embodiment described above is merely an example. For example, division into the unit is merely logical function division, and there may be another division manner during actual implementation. For example, a plurality of units or components may be combined or may be integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electronic form, a mechanical form, or another form.

The units described as separate parts may or may not be physically separated, and the parts displayed as units may or may not be physical units, may be located in one position, or may be distributed on a plurality of network units. Some or all of the units may be selected based on actual requirements to implement the solutions provided in this application.

In addition, functional units in embodiments of this application may be integrated into one unit, each of the units may exist alone physically, or two or more units may be integrated into one unit.

All or some of the foregoing embodiments may be implemented by software, hardware, firmware, or any combination thereof. When software is used for implementation, all or some of embodiments may be implemented in a form of a computer program product. The computer program product includes one or more computer instructions. When the computer program instructions are loaded and executed on a computer, some or all of the procedures or functions according to embodiments of this application are generated. The computer may be a general-purpose computer, a special-purpose computer, a computer network, or another programmable apparatus. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like. For example, the usable medium may include but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A signal transmission method, comprising:

   determining a target location of a reference signal in a discrete Fourier transform-spread-orthogonal frequency division multiplexing DFT-s-OFDM symbol based on a pattern parameter of the reference signal and a location parameter of a data block, wherein the location parameter of the data block is used to determine a location of the data block in the DFT-s-OFDM symbol; and
   receiving the reference signal at the target location.

2. The method according to claim 1, wherein
   the data block comprises a data block replicated from a previous DFT-s-OFDM symbol adjacent to the DFT-s-OFDM symbol and a data block at an end location of the DFT-s-OFDM symbol.

3. The method according to claim 1 or 2, wherein

   when an initial location falls outside a location range of the data block, the target location is the initial location;
   when the initial location falls within the location range of the data block, the target location is different from the initial location; and
   the initial location is a location that is of the reference signal in the DFT-s-OFDM symbol and that is determined based on the pattern parameter of the reference signal.

4. The method according to claim 3, wherein

   when the initial location falls within the location range of the data block, a location of the reference signal within a first location range in the DFT-s-OFDM symbol is re-determined based on the initial location, and a location of the reference signal within a second location range in the DFT-s-OFDM symbol remains unchanged; and
   the first location range represents the location range of the data block, and the second location range represents a location range other than the data block in the DFT-s-OFDM symbol; or the first location range represents the location range other than the data block in the DFT-s-OFDM symbol, and the second location range represents the location range of the data block.

5. The method according to claim 4, wherein the location of the reference signal within the first location range is re-determined based on a quantity of reference signals within the first location range and/or the location of the reference signal within the second location range.

**6.** The method according to claim 5, wherein the data block comprises a first data block and a second data block; and

the first location range represents the location range of the data block, the second location range represents the location range other than the data block in the DFT-s-OFDM symbol, and the location of the reference signal within the first location range meets the following formula:

$$X_{R1} = \lfloor M - K - X_{mean} \rfloor, \text{ and } X_{R2} = \lfloor M - X_{mean} \rfloor;$$

or
the first location range represents the location range other than the data block in the DFT-s-OFDM symbol, the second location range represents the location range of the data block, and the quantity of reference signals within the first location range meets the following formula:

$$N_1 = \left\lfloor \frac{M - K}{(M - 2R)/(CN - 2 * N_{conflict})} \right\rfloor, \text{ and } N_2 = CN - 2 * N_{conflict} - N_1,$$

wherein
$X_{R1}$ represents a location of the reference signal within a location range of the first data block, $X_{R2}$ represents a location of the reference signal within a location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers comprised in the DFT-s-OFDM symbol, CN represents a quantity of reference signals, $N_{conflict}$ represents a quantity of reference signals within the location ranges of the first data block and the second data block, and $\lfloor\;\rfloor$ represents rounding down.

**7.** The method according to any one of claims 1 to 6, wherein

the target location comprises a location of the reference signal within the location range of the data block and a location of the reference signal within the location range other than the data block in the DFT-s-OFDM symbol; and
the location of the reference signal within the location range of the data block and the location of the reference signal within the location range other than the data block in the DFT-s-OFDM symbol are separately determined based on the pattern parameter of the reference signal.

**8.** The method according to any one of claims 1 to 7, wherein

the DFT-s-OFDM symbol comprises a plurality of data blocks, and locations of the reference signal within location ranges of all the data blocks are consistent; and/or
spacing between locations of the reference signal within the location range other than the data block in the DFT-s-OFDM symbol is the same.

**9.** The method according to any one of claims 1 to 3, wherein
the target location is located within the location range other than the data block in the DFT-s-OFDM symbol.

**10.** The method according to any one of claims 1 to 8, wherein
a target quantity of reference signals within the location range of the data block is determined based on an initial quantity and a preset value, the initial quantity is determined based on the pattern parameter of the reference signal, and the preset value is an integer greater than 1 or equal to 1.

**11.** The method according to any one of claims 1 to 10, wherein the method further comprises:
performing a cyclic shift and/or frequency domain weighting processing on the DFT-s-OFDM symbol, wherein relative locations of the reference signal and the data block in the DFT-s-OFDM symbol remain unchanged.

**12.** The method according to any one of claims 1 to 11, wherein
the reference signal is a phase tracking reference signal PTRS.

**13.** The method according to claim 12, wherein
a pattern parameter of the PTRS comprises a quantity of PTRS groups and a quantity of PTRS sampling points per PTRS group.

**14.** The method according to any one of claims 1 to 13, wherein
the location parameter of the data block comprises the location of the data block in the DFT-s-OFDM symbol and a length of the data block in the DFT-s-OFDM symbol.

**15.** A signal transmission method, comprising:

mapping a reference signal to a target location in a discrete Fourier transform-spread-orthogonal frequency division multiplexing DFT-s-OFDM symbol, wherein the target location is determined based on a pattern parameter of the reference signal and a location parameter of a data block, and the location parameter of the data block is used to determine a location of the data block in the DFT-s-OFDM symbol; and
sending the DFT-s-OFDM symbol.

**16.** The method according to claim 15, wherein
the data block comprises a data block replicated from a previous DFT-s-OFDM symbol adjacent to the DFT-s-OFDM symbol and a data block at an end location of the DFT-s-OFDM symbol.

**17.** The method according to claim 15 or 16, wherein

when an initial location falls outside a location range of the data block, the target location is the initial location;
when the initial location falls within the location range of the data block, the target location is different from the initial location; and
the initial location is a location that is of the reference signal in the DFT-s-OFDM symbol and that is determined based on the pattern parameter of the reference signal.

**18.** The method according to claim 17, wherein

when the initial location falls within the location range of the data block, a location of the reference signal within a first location range in the DFT-s-OFDM symbol is re-determined based on the initial location, and a location of the reference signal within a second location range in the DFT-s-OFDM symbol remains unchanged; and
the first location range represents the location range of the data block, and the second location range represents a location range other than the data block in the DFT-s-OFDM symbol; or the first location range represents the location range other than the data block in the DFT-s-OFDM symbol, and the second location range represents the location range of the data block.

**19.** The method according to claim 18, wherein the location of the reference signal within the first location range is re-determined based on a quantity of reference signals within the first location range and/or the location of the reference signal within the second location range.

**20.** The method according to claim 19, wherein the data block comprises a first data block and a second data block; and

the first location range represents the location range of the data block, the second location range represents the location range other than the data block in the DFT-s-OFDM symbol, and the location of the reference signal within the first location range meets the following formula:

$$X_{R1} = \lfloor M - K - X_{mean} \rfloor, \text{ and } X_{R2} = \lfloor M - X_{mean} \rfloor;$$

or
the first location range represents the location range other than the data block in the DFT-s-OFDM symbol, the second location range represents the location range of the data block, and the quantity of reference signals within the first location range meets the following formula:

$$N_1 = \left\lfloor \frac{M-K}{(M-2R)/(CN-2*N_{conflict})} \right\rfloor, \text{ and } \quad N_2 = CN - 2*N_{conflict} - N_1,$$

wherein

$X_{R1}$ represents a location of the reference signal within a location range of the first data block, $X_{R2}$ represents a location of the reference signal within a location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers comprised in the DFT-s-OFDM symbol, CN represents a quantity of reference signals, $N_{conflict}$ represents a quantity of reference signals within the location ranges of the first data block and the second data block, and ⌊ ⌋ represents rounding down.

21. The method according to any one of claims 15 to 20, wherein

the target location comprises a location of the reference signal within the location range of the data block and a location of the reference signal within the location range other than the data block in the DFT-s-OFDM symbol; and
the location of the reference signal within the location range of the data block and the location of the reference signal within the location range other than the data block in the DFT-s-OFDM symbol are separately determined based on the pattern parameter of the reference signal.

22. The method according to any one of claims 15 to 21, wherein

the DFT-s-OFDM symbol comprises a plurality of data blocks, and locations of the reference signal within location ranges of all the data blocks are consistent; and/or
spacing between locations of the reference signal within the location range other than the data block in the DFT-s-OFDM symbol is the same.

23. The method according to any one of claims 15 to 17, wherein
the target location is located within the location range other than the data block in the DFT-s-OFDM symbol.

24. The method according to any one of claims 15 to 22, wherein
a target quantity of reference signals within the location range of the data block is determined based on an initial quantity and a preset value, the initial quantity is determined based on the pattern parameter of the reference signal, and the preset value is an integer greater than 1 or equal to 1.

25. The method according to any one of claims 15 to 24, wherein the method further comprises:
performing a cyclic shift and/or frequency domain weighting processing on the DFT-s-OFDM symbol, wherein relative locations of the reference signal and the data block in the DFT-s-OFDM symbol remain unchanged.

26. The method according to any one of claims 15 to 25, wherein
the reference signal is a phase tracking reference signal PTRS.

27. The method according to claim 26, wherein
a pattern parameter of the PTRS comprises a quantity of PTRS groups and a quantity of PTRS sampling points per PTRS group.

28. The method according to any one of claims 15 to 27, wherein
the location parameter of the data block comprises the location of the data block in the DFT-s-OFDM symbol and a length of the data block in the DFT-s-OFDM symbol.

29. A communication apparatus, comprising a processing unit and an interface unit, wherein

the processing unit is configured to determine a target location of a reference signal in a discrete Fourier transform-spread-orthogonal frequency division multiplexing DFT-s-OFDM symbol based on a pattern parameter of the reference signal and a location parameter of a data block, wherein the location parameter of the data block is used to determine a location of the data block in the DFT-s-OFDM symbol; and
the interface unit is configured to receive the reference signal at the target location.

30. The apparatus according to claim 29, wherein
the data block comprises a data block replicated from a previous DFT-s-OFDM symbol adjacent to the DFT-s-OFDM symbol and a data block at an end location of the DFT-s-OFDM symbol.

31. The apparatus according to claim 29 or 30, wherein

when an initial location falls outside a location range of the data block, the target location is the initial location;
when the initial location falls within the location range of the data block, the target location is different from the initial location; and
the initial location is a location that is of the reference signal in the DFT-s-OFDM symbol and that is determined based on the pattern parameter of the reference signal.

32. The apparatus according to claim 31, wherein

when the initial location falls within the location range of the data block, a location of the reference signal within a first location range in the DFT-s-OFDM symbol is re-determined based on the initial location, and a location of the reference signal within a second location range in the DFT-s-OFDM symbol remains unchanged; and
the first location range represents the location range of the data block, and the second location range represents a location range other than the data block in the DFT-s-OFDM symbol; or the first location range represents the location range other than the data block in the DFT-s-OFDM symbol, and the second location range represents the location range of the data block.

33. The apparatus according to claim 32, wherein the location of the reference signal within the first location range is re-determined based on a quantity of reference signals within the first location range and/or the location of the reference signal within the second location range.

34. The apparatus according to claim 33, wherein the data block comprises a first data block and a second data block; and

the first location range represents the location range of the data block, the second location range represents the location range other than the data block in the DFT-s-OFDM symbol, and the location of the reference signal within the first location range meets the following formula:

$$X_{R1} = \lfloor M - K - X_{mean} \rfloor, \text{ and } X_{R2} = \lfloor M - X_{mean} \rfloor;$$

or
the first location range represents the location range other than the data block in the DFT-s-OFDM symbol, the second location range represents the location range of the data block, and the quantity of reference signals within the first location range meets the following formula:

$$N_1 = \left\lfloor \frac{M - K}{(M - 2R)/(CN - 2 * N_{conflict})} \right\rfloor, \text{ and } N_2 = CN - 2 * N_{conflict} - N_1,$$

wherein
$X_{R1}$ represents a location of the reference signal within a location range of the first data block, $X_{R2}$ represents a location of the reference signal within a location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers comprised in the DFT-s-OFDM symbol, CN represents a quantity of reference signals, $N_{conflict}$ represents a quantity of reference signals within the location ranges of the first data block and the second data block, and ⌊ ⌋ represents rounding down.

35. The apparatus according to any one of claims 29 to 34, wherein

the target location comprises a location of the reference signal within the location range of the data block and a location of the reference signal within the location range other than the data block in the DFT-s-OFDM symbol; and
the location of the reference signal within the location range of the data block and the location of the reference signal within the location range other than the data block in the DFT-s-OFDM symbol are separately determined based on the pattern parameter of the reference signal.

36. The apparatus according to any one of claims 29 to 35, wherein

the DFT-s-OFDM symbol comprises a plurality of data blocks, and locations of the reference signal within location ranges of all the data blocks are consistent; and/or
spacing between locations of the reference signal within the location range other than the data block in the DFT-s-OFDM symbol is the same.

37. The apparatus according to any one of claims 29 to 31, wherein
the target location is located within the location range other than the data block in the DFT-s-OFDM symbol.

38. The apparatus according to any one of claims 29 to 36, wherein
a target quantity of reference signals within the location range of the data block is determined based on an initial quantity and a preset value, the initial quantity is determined based on the pattern parameter of the reference signal, and the preset value is an integer greater than 1 or equal to 1.

39. The apparatus according to any one of claims 29 to 38, wherein the apparatus further comprises:
performing a cyclic shift and/or frequency domain weighting processing on the DFT-s-OFDM symbol, wherein relative locations of the reference signal and the data block in the DFT-s-OFDM symbol remain unchanged.

40. The apparatus according to any one of claims 29 to 39, wherein
the reference signal is a phase tracking reference signal PTRS.

41. The apparatus according to claim 40, wherein
a pattern parameter of the PTRS comprises a quantity of PTRS groups and a quantity of PTRS sampling points per PTRS group.

42. The apparatus according to any one of claims 29 to 41, wherein
the location parameter of the data block comprises the location of the data block in the DFT-s-OFDM symbol and a length of the data block in the DFT-s-OFDM symbol.

43. A communication apparatus, comprising:

the processing unit, configured to map a reference signal to a target location in a discrete Fourier transform-spread-orthogonal frequency division multiplexing DFT-s-OFDM symbol, wherein the target location is determined based on a pattern parameter of the reference signal and a location parameter of a data block, and the location parameter of the data block is used to determine a location of the data block in the DFT-s-OFDM symbol; and
the interface unit, configured to send the DFT-s-OFDM symbol.

44. The apparatus according to claim 43, wherein
the data block comprises a data block replicated from a previous DFT-s-OFDM symbol adjacent to the DFT-s-OFDM symbol and a data block at an end location of the DFT-s-OFDM symbol.

45. The apparatus according to claim 43 or 44, wherein

when an initial location falls outside a location range of the data block, the target location is the initial location;

when the initial location falls within the location range of the data block, the target location is different from the initial location; and

the initial location is a location that is of the reference signal in the DFT-s-OFDM symbol and that is determined based on the pattern parameter of the reference signal.

46. The apparatus according to claim 45, wherein

when the initial location falls within the location range of the data block, a location of the reference signal within a first location range in the DFT-s-OFDM symbol is re-determined based on the initial location, and a location of the reference signal within a second location range in the DFT-s-OFDM symbol remains unchanged; and

the first location range represents the location range of the data block, and the second location range represents a location range other than the data block in the DFT-s-OFDM symbol; or the first location range represents the location range other than the data block in the DFT-s-OFDM symbol, and the second location range represents the location range of the data block.

47. The apparatus according to claim 46, wherein the location of the reference signal within the first location range is re-determined based on a quantity of reference signals within the first location range and/or the location of the reference signal within the second location range.

48. The apparatus according to claim 47, wherein the data block comprises a first data block and a second data block; and

the first location range represents the location range of the data block, the second location range represents the location range other than the data block in the DFT-s-OFDM symbol, and the location of the reference signal within the first location range meets the following formula:

$$X_{R1} = \lfloor M - K - X_{mean} \rfloor, \text{ and } X_{R2} = \lfloor M - X_{mean} \rfloor;$$

or

the first location range represents the location range other than the data block in the DFT-s-OFDM symbol, the second location range represents the location range of the data block, and the quantity of reference signals within the first location range meets the following formula:

$$N_1 = \left\lfloor \frac{M - K}{(M - 2R)/(CN - 2 * N_{conflict})} \right\rfloor, \text{ and } N_2 = CN - 2 * N_{conflict} - N_1,$$

wherein

$X_{R1}$ represents a location of the reference signal within a location range of the first data block, $X_{R2}$ represents a location of the reference signal within a location range of the second data block, $N_1$ represents a location other than $N_2$ in the DFT-s-OFDM symbol, $N_2$ represents a location range between the reference signal that falls within the location range of the first data block and the reference signal that falls within the location range of the second data block, K and R are location parameters of the data block, $X_{mean}$ represents an average value of relative locations of the reference signal within the location ranges of the first data block and the second data block, M represents a quantity of subcarriers comprised in the DFT-s-OFDM symbol, CN represents a quantity of reference signals, $N_{conflict}$ represents a quantity of reference signals within the location ranges of the first data block and the second data block, and $\lfloor \rfloor$ represents rounding down.

49. The apparatus according to any one of claims 43 to 48, wherein

the target location comprises a location of the reference signal within the location range of the data block and a location of the reference signal within the location range other than the data block in the DFT-s-OFDM symbol; and

the location of the reference signal within the location range of the data block and the location of the reference signal within the location range other than the data block in the DFT-s-OFDM symbol are separately determined based on the pattern parameter of the reference signal.

**50.** The apparatus according to any one of claims 43 to 49, wherein

the DFT-s-OFDM symbol comprises a plurality of data blocks, and locations of the reference signal within location ranges of all the data blocks are consistent; and/or
spacing between locations of the reference signal within the location range other than the data block in the DFT-s-OFDM symbol is the same.

**51.** The apparatus according to any one of claims 43 to 45, wherein
the target location is located within the location range other than the data block in the DFT-s-OFDM symbol.

**52.** The apparatus according to any one of claims 43 to 50, wherein
a target quantity of reference signals within the location range of the data block is determined based on an initial quantity and a preset value, the initial quantity is determined based on the pattern parameter of the reference signal, and the preset value is an integer greater than 1 or equal to 1.

**53.** The apparatus according to any one of claims 43 to 52, wherein the apparatus further comprises:
performing a cyclic shift and/or frequency domain weighting processing on the DFT-s-OFDM symbol, wherein relative locations of the reference signal and the data block in the DFT-s-OFDM symbol remain unchanged.

**54.** The apparatus according to any one of claims 43 to 53, wherein
the reference signal is a phase tracking reference signal PTRS.

**55.** The apparatus according to claim 54, wherein
a pattern parameter of the PTRS comprises a quantity of PTRS groups and a quantity of PTRS sampling points per PTRS group.

**56.** The apparatus according to any one of claims 43 to 55, wherein
the location parameter of the data block comprises the location of the data block in the DFT-s-OFDM symbol and a length of the data block in the DFT-s-OFDM symbol.

**57.** A communication apparatus, comprising: a processor, configured to execute instructions stored in a memory, to enable the apparatus to perform the method according to any one of claims 1 to 28.

**58.** The apparatus according to claim 57, wherein the apparatus further comprises the memory.

**59.** The apparatus according to claim 57 or 58, wherein the apparatus further comprises a communication interface, the communication interface is coupled to the processor, and
the communication interface is configured to input and/or output information.

**60.** The apparatus according to any one of claims 57 to 59, wherein the apparatus is a chip.

**61.** A computer-readable storage medium, wherein the computer-readable storage medium stores a computer program; and when the computer program runs on a computer, the computer is enabled to perform the method according to any one of claims 1 to 28.

**62.** A computer program product, wherein the computer program product comprises instructions for performing the method according to any one of claims 1 to 28.

FIG. 1

FIG. 2

Symbol 1                          Symbol 2                          Symbol 3

Replicate from                    Replicate from
the symbol 1                      the symbol 2

FIG. 3

▓ PTRS group

4A

4B

FIG. 4

FIG. 5

EP 4 336 786 A1

600

```
┌─────────────────────────────────────────────────────────────┐
│  Receive a reference signal based on a target location of     │
│  the reference signal in a target symbol                      │   621
└─────────────────────────────────────────────────────────────┘
```

Receive a reference signal based on a target location of the reference signal in a target symbol

621

Determine the target location of the reference signal in the target symbol based on a pattern parameter of the reference signal and a location parameter of a data block

610

Map the reference signal to the target location in the target symbol based on the target location of the reference signal in the target symbol

622

Send the target symbol

623

FIG. 6

—Replicate from the symbol 1—

R1   R2                     R1   R2

Symbol 1          ↤↦↤K↦          Symbol 2          ↤↦↤K↦
                   R                                 R

▨ PTRS group

FIG. 7

▨ PTRS group  ▌Conflict PTRS group

Original location distribution

New location distribution

FIG. 8

▨ PTRS group  ▌Conflict PTRS group  ▧ PTRS group

Original location distribution

New location distribution

FIG. 9

▨ PTRS group  ▨ PTRS group

Original location
distribution

New location
distribution

FIG. 10

▊ Conflict PTRS group  ▨ PTRS group

Head-tail rule

Middle rule

FIG. 11

Source bit generation → Coding and modulation → PTRS generation and mapping → Duplicate block replication → DFT → Subcarrier mapping → IFFT and CP

Channel

BLER calculation ← Demodulation and decoding ← Duplicate block de-replication ← PTRS obtaining and phase noise estimation/ compensation ← De-mapping and IDFT ← Channel estimation and frequency domain equalization ← FFT and CP removal

FIG. 12

FIG. 13

FIG. 14

Source bit generation → Coding and modulation → PTRS generation and mapping → Duplicate block replication → DFT → Frequency domain weighting → Subcarrier mapping → IFFT and CP

Channel

FFT and CP removal → Channel estimation and frequency domain equalization → Frequency domain weighting → De-mapping and IDFT → PTRS obtaining and phase noise estimation/ compensation → Duplicate block de-replication → Demodulation and decoding → BLER calculation

FIG. 15

1600

```
Terminal                                    Network
 device                                      device
```

1610: Scheduled bandwidth information

1620: Information that is related to a location
parameter of a duplicate block

```
1630: Determine a
target location of a
      PTRS
```

1640: Send data

```
1650: Receive the PTRS based on
 the target location of the PTRS,
  and perform phase noise
estimation and compensation, to
 complete data demodulation
```

FIG. 16

1700

Interface unit 1710

Processing unit 1720

FIG. 17

1800

Processor 1810

Transceiver 1830

Memory 1820

FIG. 18

FIG. 19

## INTERNATIONAL SEARCH REPORT

| International application No. |
| --- |
| **PCT/CN2022/098421** |

**A.    CLASSIFICATION OF SUBJECT MATTER**

H04L 27/26(2006.01)i;  H04W 72/00(2009.01)i

According to International Patent Classification (IPC) or to both national classification and IPC

**B.    FIELDS SEARCHED**

Minimum documentation searched (classification system followed by classification symbols)

H04L27/-;H04W72/-

Documentation searched other than minimum documentation to the extent that such documents are included in the fields searched

Electronic data base consulted during the international search (name of data base and, where practicable, search terms used)

WPABSC; CNTXT; CNABS; ENTXTC; CNKI; 3GPP; DWPI; VEN; USTXT; WOTXT; IEEE: 图案, 组数, 采样, 复制, 重复块, 交叉块, 交织, 离散傅里叶变换扩展正交频分复用, 保护间隔, 位置, 数据块, 相位跟踪参考信号, 参考信号, 冲突, cross +, RS, repeat+, repetition, CP-DFT-s-OFDM, pattern, location, position, CP, SCP-DFT-s-OFDM, block, copy, PTRS, group, sample?, DFT-s-OFDM

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111630820 A (HUAWEI TECHNOLOGIES CO., LTD.) 04 September 2020 (2020-09-04) description, paragraphs 0032-0084 | 1, 9, 12-15, 23, 26-29, 37, 40-43, 51, 54-62 |
| A | CN 110447212 A (IDAC HOLDINGS, INC.) 12 November 2019 (2019-11-12) entire document | 1-62 |
| A | CN 109246042 A (HUAWEI TECHNOLOGIES CO., LTD.) 18 January 2019 (2019-01-18) entire document | 1-62 |
| A | US 2020287679 A1 (QUALCOMM INC.) 10 September 2020 (2020-09-10) entire document | 1-62 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 September 2022** | **16 September 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/098421**

| Patent document cited in search report | | | Publication date (day/month/year) | Patent family member(s) | | | Publication date (day/month/year) |
|---|---|---|---|---|---|---|---|
| CN | 111630820 | A | 04 September 2020 | US | 2020280473 | A1 | 03 September 2020 |
| | | | | WO | 2019096415 | A1 | 23 May 2019 |
| | | | | EP | 3711269 | A1 | 23 September 2020 |
| | | | | IN | 202017025114 | A | 02 October 2020 |
| | | | | US | 11277291 | B2 | 15 March 2022 |
| | | | | CN | 111630820 | B | 05 April 2022 |
| CN | 110447212 | A | 12 November 2019 | US | 2020244503 | A1 | 30 July 2020 |
| | | | | WO | 2018175709 | A1 | 27 September 2018 |
| | | | | RU | 2019132075 | A | 12 April 2021 |
| | | | | KR | 20190141129 | A | 23 December 2019 |
| | | | | BR | 112019019739 | A2 | 14 April 2020 |
| | | | | JP | 2020515179 | A | 21 May 2020 |
| | | | | EP | 3602988 | A1 | 05 February 2020 |
| | | | | TW | 201902170 | A | 01 January 2019 |
| CN | 109246042 | A | 18 January 2019 | EP | 3611892 | A1 | 19 February 2020 |
| | | | | KR | 20190138859 | A | 16 December 2019 |
| | | | | JP | 2020522179 | A | 27 July 2020 |
| | | | | BR | 112019026008 | A2 | 23 June 2020 |
| | | | | US | 2022078067 | A1 | 10 March 2022 |
| | | | | WO | 2019037788 | A1 | 28 February 2019 |
| | | | | CN | 109428846 | A | 05 March 2019 |
| | | | | US | 2020076670 | A1 | 05 March 2020 |
| US | 2020287679 | A1 | 10 September 2020 | WO | 2020185570 | A1 | 17 September 2020 |
| | | | | US | 2021328743 | A1 | 21 October 2021 |
| | | | | EP | 3935797 | A1 | 12 January 2022 |
| | | | | CN | 113508567 | A | 15 October 2021 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110741712